# EUROPEAN PATENT APPLICATION

(11) **EP 4 439 279 A1**
(43) Date of publication of application: **02.10.2024**
(21) Application number: 21967751.5
(22) Date of filing: 17.12.2021
(51) Int. Cl.: G06F 8/65, G06F 8/71

(54) **UPGRADING METHOD BASED ON OVER-THE-AIR (OTA) TECHNOLOGY, AND COMMUNICATION APPARATUS**

(71) Applicant: Huawei Technologies Co., Ltd., Shenzhen, Guangdong 518129 (CN)
(72) Inventor: MA, Tao, Shenzhen, Guangdong 518129 (CN); ZHOU, Zheng, Shenzhen, Guangdong 518129 (CN); WANG, Yong, Shenzhen, Guangdong 518129 (CN)
(74) Representative: Maiwald GmbH
(86) International application number: PCT/CN2021/139204
(87) International publication number: WO 2023/108618

(57) **Abstract**

An upgrade method based on an over-the-air OTA technology and a communication apparatus are provided, to resolve a problem of a risk in vehicle management. The method includes: An OTA cloud receives vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and the OTA cloud sends first upgrade task information to a second target vehicle, where the first upgrade task information includes an upgrade package, the second target vehicle is at least one vehicle determined by the first device from a first target vehicle, the first target vehicle is related to the vehicle fleet information and a first vehicle, and the first vehicle is a vehicle that needs upgrade and that is obtained by the OTA cloud. The first device determines the second target vehicle that is allowed to perform upgrade, and the OTA cloud sends the first upgrade task information to the second target vehicle. This helps improve security of managing the vehicle in the vehicle fleet.

## Description

### TECHNICAL FIELD

This application relates to the field of communication technologies, and in particular, to an upgrade method based on an over-the-air OTA technology and a communication apparatus.

### BACKGROUND

With development of science and technology, terminal devices are gradually used in people's daily life, and people have increasingly high requirements on intelligence, security, and the like of the terminal devices. Usually, various types of software (such as applications) and the like are deployed in a terminal device. For example, the terminal device is a vehicle. Usually, in the vehicle, an intelligent cockpit, a sensing system, an automatic driving system, and other hardware are deployed, and an in-vehicle operating system, a navigation application, an audio and video playing application, and the like are also deployed. The software enriches functions of the terminal device. However, a vulnerability, a failure to meet a function requirement, or the like is more likely to occur. In this case, an original version needs to be upgraded to a more advanced version and the like. Therefore, the software in the terminal device needs to be upgraded, to update a software version.

Currently, upgrade based on an over-the-air (over-the-air, OTA) technology is fast and has little impact on data, and therefore is widely applied to upgrade of a smart television, a mobile phone, a tablet computer, a set-top box, a vehicle, and the like. OTA is a technology for downloading data through a wireless network. The vehicle is used as an example. An original equipment manufacturer (original equipment manufacturer, OEM) may upgrade software in the vehicle by using the OTA technology. This helps the manufacturer reduce recall costs, quickly respond to a requirement, and improve user experience.

Currently, an OTA cloud server performs upgrade mainly at two levels by using the OTA technology. One level is a vehicle type level. Specifically, the OTA cloud server releases an upgrade version and pushes an upgrade task based on a vehicle type. The other level is a vehicle level. Specifically, the OTA cloud server tracks upgrade progress based on the vehicle and performs upgrade after a driver confirms upgrade. However, in an actual application scenario, a plurality of vehicles may belong to a same owner (fleet owner, FO), and these vehicles belonging to the same owner may be referred to as a vehicle fleet (vehicle fleet). If the vehicle is still upgraded based on the two levels, an upgrade status of the vehicle is invisible to the owner of the vehicle. As a result, the owner of the vehicle cannot manage and control a software version of the vehicle in time, resulting in a risk in vehicle management.

### SUMMARY

This application provides an upgrade method based on an OTA technology and a communication apparatus, to improve security of vehicle management.

According to a first aspect, this application provides an upgrade method based on an OTA technology. The method includes: receiving vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and sending first upgrade task information to a second target vehicle, where the first upgrade task information includes an upgrade package. The second target vehicle is at least one vehicle determined by the first device from a first target vehicle. The first target vehicle is related to the vehicle fleet information and a first vehicle. The first vehicle is a vehicle that needs upgrade and that is obtained by an OTA cloud.

The method may be performed by the OTA cloud. The OTA cloud may also be referred to as an OTA cloud end, an OTA cloud server, or the like.

Based on the foregoing solution, the first device sends the vehicle fleet information to the OTA cloud, so that the OTA cloud can obtain the vehicle identifiers of the vehicles belonging to the same vehicle fleet, and then can send the first upgrade task information to the second target vehicle that needs upgrade and that is determined by the first device. This helps improve security of managing the vehicle in the vehicle fleet by the first device, and helps improve a level of managing software of the vehicle in the vehicle fleet by the first device.

In a possible implementation, the OTA cloud may determine the first target vehicle based on the vehicle fleet information from the first device and a first vehicle identifier. The first vehicle identifier is an identifier of the vehicle that needs upgrade and that is obtained by the OTA cloud server. The first target vehicle is a vehicle that needs upgrade in the vehicle fleet and that is determined by the OTA cloud.

The OTA cloud first determines the first target vehicle that needs upgrade in the vehicle fleet, so that the first device quickly determines which first target vehicles that are allowed to perform upgrade.

The following shows examples of two methods for determining the second target vehicle.

### Method 1

The OTA cloud sends a first request message to the first device. The first request message is used to request the first device to determine the first target vehicle that is allowed to perform upgrade. The first target vehicle that is allowed to perform upgrade and that is determined by the first device is referred to as the second target vehicle. For example, the first request message includes a vehicle identifier of the first target vehicle.

Correspondingly, the OTA cloud receives a first response message from the first device or the second target vehicle. The first response message includes information about the second target vehicle. For example, the first response message includes a vehicle identifier of the second target vehicle.

In a possible implementation, the first request message further includes association information of an upgrade task, and the association information of the upgrade task includes at least one of duration required for upgrade, an upgrade purpose, or a change brought by upgrade.

The first device can flexibly select, by using the association information of the upgrade task carried in the first request message and based on an actual situation, the first target vehicle that is allowed to perform upgrade.

Further, in a possible implementation, the first upgrade task information further includes an upgrade type, and the upgrade type is confirmed upgrade.

After determining that the upgrade type is confirmed upgrade, the second target vehicle may perform upgrade according to an OTA upgrade procedure based on the upgrade package in the received first upgrade task information, without confirmation by a user (or referred to as a driver) of the second target vehicle. This can reduce a burden of the driver.

### Method 2

The OTA cloud sends first indication information to the first target vehicle, where the first indication information indicates the first target vehicle to request the first device to confirm whether upgrade is allowed; and receives a second response message from the first device or the second target vehicle, where the second response message includes information about the second target vehicle.

Further, in a possible implementation, for example, the first indication information may include an address of the first device.

The OTA cloud sends the first indication information to the first target vehicle, to trigger the first device to determine whether the first target vehicle is allowed to perform upgrade. This helps improve security of managing the vehicle in the vehicle fleet by the first device, and can improve a level of managing software of the vehicle in the vehicle fleet by the first device. In addition, after the first device determines whether the first target vehicle is allowed to perform upgrade, it is not necessary to prompt or ask a driver for confirmation through HMI. This helps reduce a burden of the driver.

Further, in a possible implementation, the first indication information may further include association information of an upgrade task, and the association information of the upgrade task includes at least one of duration required for upgrade, an upgrade purpose, or a change brought by upgrade.

The first indication information carries the association information of the upgrade task, so that the first target vehicle can determine whether to send a second request message to the OTA cloud or the first device. Further, when the first target vehicle sends the second request message to the first device, the second request message can also carry the associated information of the upgrade task. This helps the first device determines, based on the associated information of the upgrade task, whether the first target vehicle that sends the second request message is allowed to perform upgrade.

Based on the foregoing content, in a possible implementation, the method further includes: The OTA cloud receives an upgrade result from the second target vehicle. The upgrade result includes an upgrade success, an upgrade failure, a rollback success, or a rollback failure.

Further, in a possible implementation, the OTA cloud sends the upgrade result to the first device.

After performing upgrade based on OTA, the second target vehicle notifies the OTA cloud of the upgrade result in time. Further, the OTA cloud can synchronize the upgrade result of the second target vehicle to the first device in time, so that upgrade information on the first device, the OTA cloud, and the second target vehicle can be synchronized. In this way, the first device can effectively and securely manage an upgrade status of each vehicle in the vehicle fleet.

In another possible implementation, the OTA cloud receives an upgrade result that is from the second target vehicle and that is forwarded by the first device.

After performing upgrade based on OTA, the second target vehicle notifies the first device of the upgrade result in time. Further, the first device can synchronize the upgrade result of the second target vehicle to the OTA cloud in time, so that upgrade information on the first device, the OTA cloud, and the second target vehicle can be synchronized. In this way, the first device can effectively and securely manage an upgrade status of each vehicle in the vehicle fleet.

According to a second aspect, this application provides an upgrade method based on an OTA technology. The method includes: A first device sends vehicle fleet information to an OTA cloud, where a vehicle fleet includes at least two vehicles, and the vehicle fleet information includes vehicle identifiers of vehicles belonging to a same vehicle fleet; the first device receives a first request message from the OTA cloud, where the first request message includes a vehicle identifier of a first target vehicle, and the first target vehicle is a vehicle that needs upgrade in the vehicle fleet and that is determined by the OTA cloud; the first device determines at least one vehicle in the first target vehicle as a second target vehicle based on the first request message; and the first device sends a first response message to the OTA cloud, where the first response message includes information about the second target vehicle.

In a possible implementation, the first request message further includes association information of an upgrade task, and the association information of the upgrade task includes at least one of duration required for upgrade, an upgrade purpose, or a change brought by upgrade.

In a possible implementation, the method further includes: The first device receives an upgrade result from the second target vehicle. The upgrade result includes an upgrade success, an upgrade failure, a rollback success, or a rollback failure.

Further, in a possible implementation, the method further includes: The first device sends the upgrade result to the OTA cloud.

In another possible implementation, the first device receives an upgrade result that is of the second target vehicle and that is forwarded by the OTA cloud.

According to a third aspect, this application provides an upgrade method based on an OTA technology. The method includes: A second target vehicle receives first upgrade task information from an OTA cloud, where the first upgrade task information includes an upgrade package and an upgrade task type; and directly performs, based on the upgrade package, upgrade if the upgrade type is determined to be confirmed upgrade.

For technical effects that can be achieved in any one of the second aspect and the third aspect, refer to descriptions of beneficial effects in the first aspect. Details are not described herein again.

According to a fourth aspect, this application provides an upgrade method based on an OTA technology. The method includes: receiving vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and sending second upgrade task information to a first target vehicle, where the second upgrade task information includes an upgrade package and first indication information. The first target vehicle is related to the vehicle fleet information and a first vehicle. The first vehicle is a vehicle that needs upgrade and that is obtained by an OTA cloud. The first indication information indicates the first target vehicle to request the first device to confirm whether the first target vehicle is allowed to perform upgrade. It may be understood that the upgrade package corresponds to the first target vehicle that is allowed to perform upgrade.

The method may be performed by the OTA cloud. The OTA cloud may also be referred to as an OTA cloud end, an OTA cloud server, or the like.

Based on the foregoing solution, the first device sends the vehicle fleet information to the OTA cloud, so that the OTA cloud can obtain the vehicle identifiers of the vehicles belonging to the same vehicle fleet. Further, the OTA cloud sends the second upgrade task information that includes the first indication information to the first target vehicle, to indicate the first target vehicle to request the first device to confirm whether the first target vehicle is allowed to perform upgrade. In this way, the first device can determine whether the first target vehicle is allowed to perform upgrade.

In a possible implementation, the OTA cloud may determine the first target vehicle based on the vehicle fleet information from the first device and a first vehicle identifier. The first vehicle identifier is an identifier of the vehicle that needs upgrade and that is obtained by the OTA cloud server. The first target vehicle is a vehicle that needs upgrade in the vehicle fleet and that is determined by the OTA cloud.

In a possible implementation, the first indication information includes an address of the first device.

The first target vehicle can accurately and quickly determine the first device by using the address of the first device.

In a possible implementation, the second upgrade task information further includes association information of an upgrade task, and the association information of the upgrade task includes at least one of duration required for upgrade, an upgrade purpose, or a change brought by upgrade.

The first device can flexibly select, by using the association information of the upgrade task carried in the first request message and based on an actual situation, the first target vehicle that is allowed to perform upgrade.

In a possible implementation, the method further includes: The OTA cloud receives an upgrade result from a second target vehicle. The upgrade result includes an upgrade success, an upgrade failure, a rollback success, or a rollback failure.

Further, in a possible implementation, the OTA cloud sends the upgrade result to the first device.

After performing upgrade based on OTA, the second target vehicle notifies the OTA cloud of the upgrade result in time. Further, the OTA cloud can synchronize the upgrade result of the second target vehicle to the first device in time, so that upgrade information on the first device, the OTA cloud, and the second target vehicle can be synchronized. In this way, the first device can effectively and securely manage an upgrade status of each vehicle in the vehicle fleet.

In another possible implementation, the OTA cloud receives an upgrade result that is from a second target vehicle and that is forwarded by the first device.

After performing upgrade based on OTA, the second target vehicle notifies the first device of the upgrade result in time. Further, the first device can synchronize the upgrade result of the second target vehicle to the OTA cloud in time, so that upgrade information on the first device, the OTA cloud, and the second target vehicle can be synchronized. In this way, the first device can effectively and securely manage an upgrade status of each vehicle in the vehicle fleet.

According to a fifth aspect, this application provides an upgrade method based on an OTA technology. The method includes: A first device sends vehicle fleet information to an OTA cloud, where the first device is configured to manage a vehicle fleet, the vehicle fleet includes at least two vehicles, and the vehicle fleet information includes vehicle identifiers of vehicles belonging to a same vehicle fleet; the first device receives a third request message from a first target vehicle, where the third request message is used to request the first device to confirm whether the first target vehicle is allowed to perform upgrade, the first target vehicle is related to the vehicle fleet information and a first vehicle, and the first vehicle is a vehicle that needs upgrade and that is obtained by the OTA cloud; and the first device sends a third response message to the first target vehicle, where the third response message includes information indicating that the first target vehicle is allowed to perform upgrade.

In a possible implementation, the third request message may further include association information of an upgrade task, and the association information of the upgrade task includes at least one of duration required for upgrade, an upgrade purpose, or a change brought by upgrade.

In a possible implementation, the method further includes: The first device receives an upgrade result from the first target vehicle. The upgrade result includes an upgrade success, an upgrade failure, a rollback success, or a rollback failure.

Further, in a possible implementation, the method further includes: The first device sends the upgrade result to the OTA cloud.

In another possible implementation, the first device receives an upgrade result that is of the first target vehicle and that is forwarded by the OTA cloud.

According to a sixth aspect, this application provides an upgrade method based on an OTA technology. The method includes: receiving second upgrade task information from an OTA cloud, where the second upgrade task information includes an upgrade package and first indication information, the first indication information indicates a first target vehicle to request a first device to confirm whether the first target vehicle is allowed to perform upgrade, the first device is configured to manage a vehicle fleet, the vehicle fleet includes at least two vehicles, vehicle fleet information includes vehicle identifiers of vehicles belonging to a same vehicle fleet, the first target vehicle is related to the vehicle fleet information and a first vehicle, and the first vehicle is a vehicle that needs upgrade and that is obtained by the OTA cloud; sending a third request message to the first device or the OTA cloud based on the second upgrade task information, where the third request message is used to request the first device to confirm whether the first target vehicle is allowed to perform upgrade; and receiving a third response message from the first device, where the third response message includes information indicating that the first target vehicle is allowed to perform upgrade.

The method may be performed by the first target vehicle.

In a possible implementation, the third request message further includes association information of an upgrade task, and the association information of the upgrade task includes at least one of duration required for upgrade, an upgrade purpose, or a change brought by upgrade.

In a possible implementation, an upgrade result of the first target vehicle is sent to the first device or the OTA cloud. The upgrade result includes an upgrade success, an upgrade failure, a rollback success, or a rollback failure.

For technical effects that can be achieved in any one of the fifth aspect and the sixth aspect, refer to descriptions of beneficial effects in the fourth aspect. Details are not described herein again.

According to a seventh aspect, this application provides an upgrade method based on an OTA technology. The method includes: receiving vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and sending third upgrade task information to the first device, where the third upgrade task information includes a vehicle identifier of a first target vehicle and an upgrade package, the first target vehicle is related to the vehicle fleet information and a first vehicle, the first vehicle is a vehicle that needs upgrade and that is obtained by an OTA cloud, the upgrade package corresponds to the first target vehicle, further, the upgrade package corresponds to a second target vehicle, and the second target vehicle is at least one vehicle determined by the first device from the first target vehicle.

The method may be performed by the OTA cloud. The OTA cloud may also be referred to as an OTA cloud end, an OTA cloud server, or the like.

Based on the foregoing solution, the first device sends the vehicle fleet information to the OTA cloud, so that the OTA cloud can obtain the vehicle identifiers of the vehicles belonging to the same vehicle fleet, and further sends the third upgrade task information including the vehicle identifier of the first target vehicle to the first device. In this way, the first device can determine which first target vehicles that are allowed to perform upgrade, to help improve security of managing the vehicle in the vehicle fleet.

In a possible implementation, the OTA cloud may determine the first target vehicle based on the vehicle fleet information from the first device and a first vehicle identifier. The first vehicle identifier is an identifier of the vehicle that needs upgrade and that is obtained by the OTA cloud server. The first target vehicle is a vehicle that needs upgrade in the vehicle fleet and that is determined by the OTA cloud.

The OTA cloud first determines the first target vehicle that needs upgrade in the vehicle fleet, so that the first device quickly determines which first target vehicles that are allowed to perform upgrade.

In a possible implementation, the third upgrade task information further includes association information of an upgrade task, and the association information of the upgrade task includes at least one of duration required for upgrade, an upgrade purpose, or a change brought by upgrade.

In a possible implementation, the method further includes: The OTA cloud receives an upgrade result from the second target vehicle. The upgrade result includes an upgrade success, an upgrade failure, a rollback success, or a rollback failure.

Further, in a possible implementation, the OTA cloud sends the upgrade result to the first device.

After performing upgrade based on OTA, the second target vehicle notifies the OTA cloud of the upgrade result in time. Further, the OTA cloud can synchronize the upgrade result of the second target vehicle to the first device in time, so that upgrade information on the first device, the OTA cloud, and the second target vehicle can be synchronized. In this way, the first device can effectively and securely manage an upgrade status of each vehicle in the vehicle fleet.

In another possible implementation, the OTA cloud receives an upgrade result that is from the second target vehicle and that is forwarded by the first device.

After performing upgrade based on OTA, the second target vehicle notifies the first device of the upgrade result in time. Further, the first device can synchronize the upgrade result of the second target vehicle to the OTA cloud in time, so that upgrade information on the first device, the OTA cloud, and the second target vehicle can be synchronized. In this way, the first device can effectively and securely manage an upgrade status of each vehicle in the vehicle fleet.

According to an eighth aspect, this application provides an upgrade method based on an OTA technology. The method includes: A first device sends vehicle fleet information to an OTA cloud, where the first device is configured to manage a vehicle fleet, the vehicle fleet includes at least two vehicles, and the vehicle fleet information includes vehicle identifiers of vehicles belonging to a same vehicle fleet; the first device receives third upgrade task information from the OTA cloud, where the third upgrade task information includes a first target vehicle identifier and an upgrade package; the first device determines at least one vehicle in a first target vehicle as a second target vehicle based on the third upgrade task information; and the first device sends fourth upgrade task information to the second target vehicle, where the fourth upgrade task information is related to the third upgrade task information.

In a possible implementation, the fourth upgrade task information includes information obtained after the first device performs digital signature on the upgrade package.

Digital signature is performed on the upgrade package included in the third upgrade task information, to further improve security of communication between the first device and the second target vehicle.

In a possible implementation, the fourth upgrade task information further includes an upgrade type, and the upgrade type is confirmed upgrade.

In a possible implementation, the method further includes: The first device receives an upgrade result from the second target vehicle. The upgrade result includes an upgrade success, an upgrade failure, a rollback success, or a rollback failure.

Further, in a possible implementation, the method further includes: The first device sends the upgrade result to the OTA cloud.

In another possible implementation, the first device receives an upgrade result that is of the second target vehicle and that is forwarded by the OTA cloud.

For technical effects that can be achieved in any aspect in the eighth aspect, refer to descriptions of beneficial effects in the seventh aspect. Details are not described herein again.

According to a ninth aspect, this application provides a communication apparatus. The communication apparatus is configured to implement the method according to any one of the first aspect and the possible implementations of the first aspect, is configured to implement the method according to any one of the second aspect and the possible implementations of the second aspect, is configured to implement the method according to any one of the third aspect and the possible implementations of the third aspect, is configured to implement the method according to any one of the fourth aspect and the possible implementations of the fourth aspect, is configured to implement the method according to any one of the fifth aspect and the possible implementations of the fifth aspect, is configured to implement the method according to any one of the sixth aspect and the possible implementations of the sixth aspect, is configured to implement the method according to any one of the seventh aspect and the possible implementations of the seventh aspect, or is configured to implement the method according to any one of the eighth aspect and the possible implementations of the eighth aspect, and include corresponding functional modules, respectively configured to implement the steps in the foregoing methods. A function may be implemented by hardware, or may be implemented by hardware executing corresponding software. The hardware or software includes one or more modules corresponding to the foregoing function.

In a possible implementation, the communication apparatus may be an OTA cloud, may be a first device, may be a vehicle, or may be a module, for example, a chip, a chip system, or a circuit, that is used in an OTA cloud, a first device, or a vehicle. For beneficial effects, refer to the descriptions of the corresponding method. Details are not described herein again. The communication apparatus may include an interface circuit and a processor. Through a logic circuit or by executing code instructions, the processor is configured to implement the method according to any one of the first aspect and the possible implementations of the first aspect is configured to implement the method according to any one of the second aspect and the possible implementations of the second aspect, is configured to implement the method according to any one of the third aspect and the possible implementations of the third aspect, is configured to implement the method according to any one of the fourth aspect and the possible implementations of the fourth aspect, is configured to implement the method according to any one of the fifth aspect and the possible implementations of the fifth aspect, is configured to implement the method according to any one of the sixth aspect and the possible implementations of the sixth aspect, is configured to implement the method according to any one of the seventh aspect and the possible implementations of the seventh aspect, or is configured to implement the method according to any one of the eighth aspect and the possible implementations of the eighth aspect. The interface circuit is configured to: receive a signal from another communication apparatus other than the communication apparatus, and transmit the signal to the processor, or send a signal from the processor to another communication apparatus other than the communication apparatus. The interface circuit may be an independent receiver, an independent transmitter, or a transceiver integrating a receiving function and a sending function. Optionally, the communication apparatus may further include a memory. The memory may be coupled to the processor, and stores program instructions and data that are necessary for the communication apparatus. Optionally, the communication apparatus may further include a memory. The memory may be coupled to the processor, and stores program instructions and data that are necessary for the communication apparatus.

For possible implementations, refer to the description of the foregoing method. Details are not described herein again.

According to a tenth aspect, this application provides a communication apparatus. The communication apparatus is configured to implement the method according to any one of the first aspect and the possible implementations of the first aspect, is configured to implement the method according to any one of the second aspect and the possible implementations of the second aspect, is configured to implement the method according to any one of the third aspect and the possible implementations of the third aspect, is configured to implement the method according to any one of the fourth aspect and the possible implementations of the fourth aspect, is configured to implement the method according to any one of the fifth aspect and the possible implementations of the fifth aspect, is configured to implement the method according to any one of the sixth aspect and the possible implementations of the sixth aspect, is configured to implement the method according to any one of the seventh aspect and the possible implementations of the seventh aspect, or is configured to implement the method according to any one of the eighth aspect and the possible implementations of the eighth aspect, and include corresponding functional modules, respectively configured to implement the steps in the foregoing methods. A function may be implemented by hardware, or may be implemented by hardware executing corresponding software. The hardware or software includes one or more modules corresponding to the foregoing function.

In a possible implementation, the communication apparatus may be an OTA cloud, may be a first device, or may be a vehicle. The communication apparatus may include a processing module and a transceiver module. These modules may perform corresponding functions of a terminal device in the foregoing method example. For details, refer to the detailed descriptions in the method examples. Details are not described herein again.

According to an eleventh aspect, this application provides a chip, including a processor. The processor is coupled to a memory, and is configured to execute a computer program or instructions stored in the memory, to enable to the chip to implement the method according to any one of the first aspect and the possible implementations of the first aspect, implement the method according to any one of the second aspect and the possible implementations of the second aspect, implement the method according to any one of the third aspect and the possible implementations of the third aspect, implement the method according to any one of the fourth aspect and the possible implementations of the fourth aspect, implement the method according to any one of the fifth aspect and the possible implementations of the fifth aspect, implement the method according to any one of the sixth aspect and the possible implementations of the sixth aspect, implement the method according to any one of the seventh aspect and the possible implementations of the seventh aspect, or implement the method according to any one of the eighth aspect and the possible implementations of the eighth aspect.

According to a twelfth aspect, this application provides a communication system. The communication system includes an OTA cloud, a first device, and a second target vehicle. The OTA cloud may be configured to perform the method according to any one of the first aspect and the possible implementations of the first aspect. The first device may be configured to perform the method according to any one of the second aspect and the possible implementations of the second aspect. The second target vehicle is configured to perform the method according to any one of the third aspect and the possible implementations of the third aspect.

According to a thirteenth aspect, this application provides a communication system. The communication system includes an OTA cloud, a first device, and a first target vehicle. The OTA cloud may be configured to perform the method according to any one of the fourth aspect and the possible implementations of the fourth aspect. The first device may be configured to perform the method according to any one of the fifth aspect and the possible implementations of the fifth aspect. The first target vehicle may be configured to perform the method according to any one of the sixth aspect and the possible implementations of the sixth aspect.

According to a fourteenth aspect, this application provides a communication system. The communication system includes an OTA cloud and a first device. The OTA cloud may be configured to perform the method according to any one of the seventh aspect and the possible implementations of the seventh aspect. The first device may be configured to perform the method according to any one of the eighth aspect and the possible implementations of the eighth aspect.

According to a fifteenth aspect, this application provides a computer-readable storage medium. The computer-readable storage medium stores a computer program or instructions. When the computer program or the instructions are executed by a communication apparatus, the communication apparatus is enabled to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, perform the method according to any one of the fifth aspect and the possible implementations of the fifth aspect, perform the method according to any one of the sixth aspect and the possible implementations of the sixth aspect, perform the method according to any one of the seventh aspect and the possible implementations of the seventh aspect, or perform the method according to any one of the eighth aspect and the possible implementations of the eighth aspect.

According to a sixteenth aspect, this application provides a computer program product. The computer program product includes a computer program or instructions. When the computer program or the instructions are executed by a communication apparatus, the communication apparatus is enabled to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, perform the method according to any one of the fifth aspect and the possible implementations of the fifth aspect, perform the method according to any one of the sixth aspect and the possible implementations of the sixth aspect, perform the method according to any one of the seventh aspect and the possible implementations of the seventh aspect, or perform the method according to any one of the eighth aspect and the possible implementations of the eighth aspect.

### BRIEF DESCRIPTION OF DRAWINGS

FIG. 1 is a diagram of an architecture of a communication system according to this application;
FIG. 2 is a diagram of a possible application scenario according to this application;
FIG. 3 is a schematic flowchart of an upgrade method based on an OTA technology according to this application;
FIG. 4 is a schematic flowchart of a method for determining a second target vehicle by a first device according to this application;
FIG. 5 is a schematic flowchart of another method for determining a second target vehicle by a first device according to this application;
FIG. 6 is a schematic flowchart of still another method for determining a second target vehicle by a first device according to this application;
FIG. 7 is a schematic flowchart of an upgrade method for a second target vehicle according to this application;
FIG. 8 is a schematic flowchart of another upgrade method based on an OTA technology according to this application;
FIG. 9 is a schematic flowchart of a method for determining, by a first device, a first target vehicle that is allowed to perform upgrade according to this application;
FIG. 10 is a schematic flowchart of another method for determining, by a first device, a first target vehicle that is allowed to perform upgrade according to this application;
FIG. 11 is a schematic flowchart of another upgrade method based on an OTA technology according to this application;
FIG. 12 is a schematic flowchart of a method for sending, by a first device, fourth upgrade task information to a second target vehicle according to this application;
FIG. 13 is a diagram of a structure of a communication apparatus according to this application; and
FIG. 14 is a diagram of a structure of a communication apparatus according to this application.

### DESCRIPTION OF EMBODIMENTS

The following describes in detail embodiments of this application with reference to the accompanying drawings.

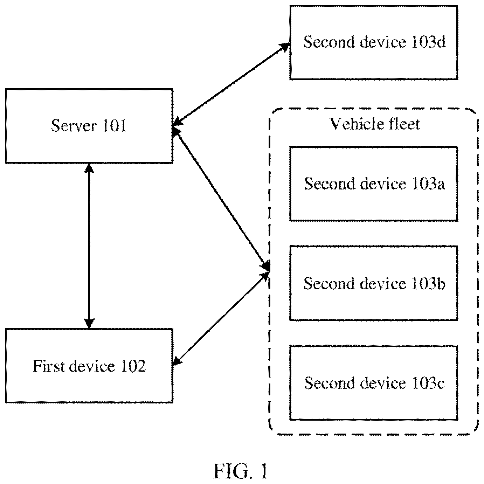

FIG. 1 is a diagram of an architecture of a communication system to which this application is applicable. The communication system may include a server, a first device, and a second device. For example, in FIG. 1, the communication system includes a server 101, a first device 102, and four second devices (which are respectively a second device 103a, a second device 103b, a second device 103c, and a second device 103d). The second device 103a, the second device 103b, and the second device 103c belong to a same team. The first device 102 is configured to manage the team (or referred to as a group) including the second devices. It may also be understood that the second device 103a, the second device 103b, and the second device 103c belong to the first device 102. It should be noted that the communication system may further include a second device that does not belong to the team (or the group), for example, a second device 103d. Communication between the server 101 and the first device 102 and communication between the server 101 and the second device 103a, the second device 103b, the second device 103c, and the second device 103d may be implemented through a mobile communication network (for example, a network like 2G/3G/4G/5G/future 6G), a wireless local area network (wireless local area network, WLAN), or the like, or by using a short-range communication technology. In an embodiment of this application, the short-range communication technology may include a technology that supports wireless short-range communication. Wireless short-range communication includes that both communication parties transmit information by using a radio wave and a transmission distance is within a small range (for example, within 100 meters), which may be referred to as short-range wireless communication. Short-range wireless communication includes but is not limit to a Bluetooth (Bluetooth) technology, a wireless fidelity (wireless fidelity, Wi-Fi) technology, a near field communication (near field communication, NFC) technology, a Wi-Fi Aware technology, a general short-range communication technology, a short-range communication technology specified by the SparkLink Alliance, and the like. Communication between the first device 102 and the second device 103b, the second device 103c, and the second device 103d may be implemented through a mobile communication network (for example, a network like 2G/3G/4G/5G/future 6G), a WLAN, a Wi-Fi network, or the like, or by using a short-range communication technology. For the short-range communication technology, refer to the foregoing related description. Details are not described herein again.

The server 101 may be a single server, or may be a server cluster including a plurality of servers. For example, the server 101 may be a server cluster in which a plurality of servers are deployed by using a distributed architecture. The server cluster may include one or more of a cloud computing server, a content delivery network (content delivery network, CDN) server, a domain name resolution system (domain name system, DNS) server, and the like. The servers may coordinate with each other to jointly implement functions such as computing, data storage, and communication. For ease of description, in this application, a single server, a distributed server, a server cluster, and the like are collectively referred to as a server. Further, the server may be a physical device, or may be a virtual machine, a container, or the like deployed on a cloud. The server may store an upgrade file of the second device. The first device 102 may be a terminal device like user equipment (user equipment, UE), a host, a server, a mobile phone, a notebook computer, or a tablet computer that is configured to manage the team including the second devices. For example, the second devices (for example, the second device 103a, the second device 103b, the second device 103c, and the second device 103d) may be devices such as vehicles, smart televisions, smartphones, tablet computers, or set-top boxes.

It should be noted that forms and quantities of the server, the first device, and the second devices shown in FIG. 1 are merely examples, and constitute no limitation on this application.

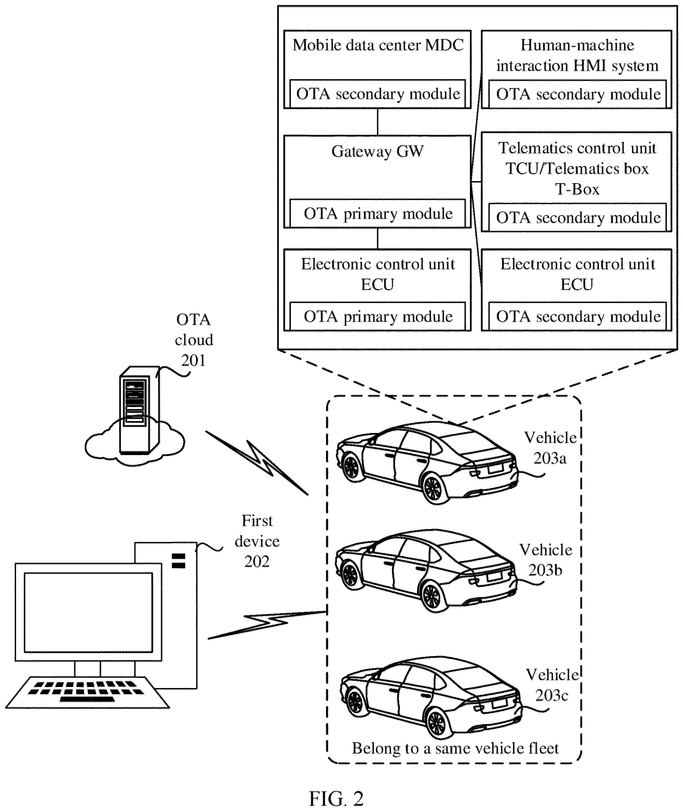

Based on the foregoing content, FIG. 2 is a diagram of a possible application scenario according to this application. This application scenario is described by using an example in which a vehicle in a vehicle fleet is upgraded based on OTA. In this application scenario, for example, the server is an OTA cloud 201 (or referred to as an OTA cloud end, an OTA cloud server, or the like), a first device 202 is a host connected to a display, and second devices are a vehicle 203a, a vehicle 203b, and a vehicle 203c. The vehicle 203a, the vehicle 203b, and the vehicle 203c belong to a same vehicle fleet (vehicle fleet). The vehicle fleet belongs to the first device 202, that is, the first device 202 is configured to manage the vehicle 203a, the vehicle 203b, and the vehicle 203c. The first device 202 may be referred to as a vehicle fleet (or vehicle) owner. The OTA cloud 201 may communicate with the first device 202 through a mobile communication network (for example, a network like 2G/3G/4G/5G/future 6G) or a WLAN, by using a short-range communication technology, or the like. A manner in which the first device communicates with the OTA cloud is not limited in this application. Further, the OTA cloud may also communicate with the vehicle 203a, the vehicle 203b, the vehicle 203c, and a vehicle 203d through a mobile communication network (for example, a network like 2G/3G/4G/5G/future 6G) or a WLAN, by using a short-range communication technology, or the like. Further, the first device 202 may also communicate with the vehicle 203a, the vehicle 203b, the vehicle 203c, and the vehicle 203d through a mobile communication network (for example, a network like 2G/3G/4G/5G/future 6G) or a WLAN, by using a short-range communication technology, or the like.

Vehicles (for example, the vehicle 203a, the vehicle 203b, and the vehicle 203c) include a vehicle that is in any form and that may perform software upgrade, for example, an intelligent vehicle, an electric vehicle, a digital vehicle, a car, a truck, a motorcycle, a bus, a lawn mower, an entertainment vehicle, a playground vehicle, a construction device, a tram, or a golf cart. This is not limited in this application. In FIG. 2, the vehicle 203a is used as an example. The vehicle includes at least one or more of a gateway (gateway, GW), a human-machine interaction (human-machine interaction, HMI) system, a telematics control unit (telematics control unit, TCU), a telematics box (telematics box, T-Box), an electronic control unit (electronic control unit, ECU), and an integrated software and hardware platform used to support intelligent driving, namely, a vehicle computing platform (vehicle computing platform), for example, a mobile data center (mobile data center, MDC). The GW is a core component in a vehicle electronic and electrical architecture. The GW serves as a data exchange hub of a vehicle network, and may route network data of a controller area network (controller area network, CAN), a local interconnect network (local interconnect network, LIN), a media oriented system transport (media oriented system transport, MOST) network, and the like in different networks. The MDC is an intelligent vehicle computing platform of the vehicle, and the MDC may be used to implement an autonomous driving function of the vehicle. The HMI is an infotainment system of the vehicle. The TCU and the T-Box are mainly configured to communicate with a device (for example, a cloud or the vehicle fleet owner) outside the vehicle, a background system of the vehicle, and the like. The ECU is a dedicated microcomputer controller of the vehicle. The ECU includes but is not limited to a vehicle integration unit (vehicle integrated/integration unit, VIU), a cockpit domain controller (cockpit domain controller, CDC), a vehicle domain controller (vehicle domain controller, VDC), and the like. It should be noted that, in this application, what needs to be upgraded may include but is not limited to any one or more of the GW, the MDC, the HMI, the TCU, the T-Box, and the ECU, and may also include an operating system, navigation software, map software, monitoring software, and the like.

The OTA cloud is a server that exchanges information with the vehicle in a process of upgrade based on OTA. Usually, the OTA cloud may be a server that provides upgrade based on OTA. For example, the OTA cloud may establish a connection to a software development device through an internet protocol (internet protocol, IP) network, to obtain a software package that is required for upgrade, and send the software package to a vehicle that needs upgrade. Further, the OTA cloud may further indicate, to the vehicle, which software needs to be upgraded. For example, the OTA cloud stores an identification number and software version information of each vehicle. Generally, the OTA cloud may be managed by the OEM. The first device may be the host configured to manage the vehicle fleet, and the host may be connected to the display.

Further, in a possible implementation, in the vehicle, an OTA primary module (or referred to as an OTA master module or an upgrade main module) may be deployed in the GW, and some of other components have OTA secondary modules (or referred to as OTA slave modules or upgrade secondary modules of corresponding components). The OTA primary module may be configured to coordinate the OTA secondary module of each component to execute an upgrade task. Specifically, the OTA primary module in the GW receives an upgrade package sent by the OTA cloud, and distributes the upgrade package to the OTA secondary module. In this way, the OTA secondary module indicates another component in the vehicle to install and activate the upgrade package, to complete upgrade of one or more components in the vehicle. It may be understood that the OTA primary module may alternatively be deployed in a TCU module or a T-Box module.

It may be understood that forms and quantities of the OTA cloud, the first device, and the vehicles shown in FIG. 2 are merely examples, and constitute no limitation on this application.

It should be noted that the foregoing described system architecture and application scenario are intended to describe the technical solutions in this application more clearly, and constitute no limitation on the technical solutions provided in this application. For example, an upgrade method based on OTA in this application may be further applied to an upgrade scenario of a device like a smart television, a smartphone, a tablet computer, or a set-top box.

As described in the background, a user and an owner of vehicles belonging to a same vehicle fleet are usually different. Therefore, an upgrade status of the vehicle is invisible to the owner of the vehicle. As a result, the owner of the vehicle cannot manage and control a software version of the vehicle in time, resulting in a risk in vehicle management.

In view of the foregoing problem, this application provides an upgrade method based on OTA. According to the upgrade method based on OTA, an owner of a vehicle fleet can manage and control an upgrade status of a vehicle in the vehicle fleet in time, to improve security of vehicle management.

The upgrade method based on OTA provided in this application may be applied to the communication system shown in FIG. 1. In the upgrade method based on OTA described below, an OTA cloud may be the server 101 in FIG. 1, a first device may be the first device 102 in FIG. 1, and the vehicle in the vehicle fleet may be the second device 103a, the second device 103b, or the second device 103c in FIG. 1. Alternatively, the upgrade method based on OTA provided in this application may be applied to the application scenario shown in FIG. 2. An OTA cloud may be the OTA cloud 201 in FIG. 2, a first device may be the first device 202 in FIG. 2, and the vehicle in the vehicle fleet may be the vehicle 203a, the vehicle 203b, or the vehicle 203c in FIG. 2.

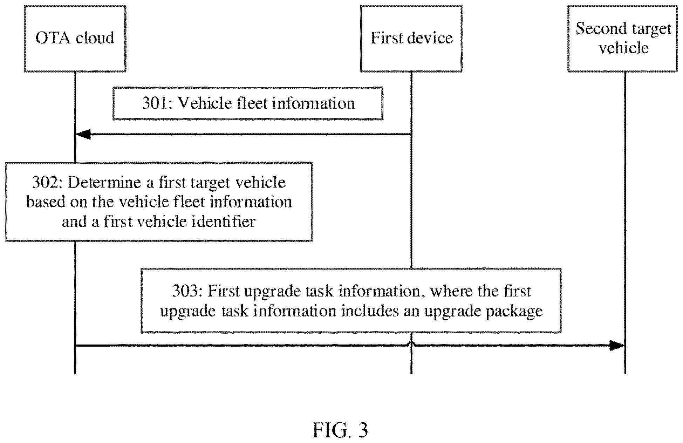

Based on the foregoing content, with reference to FIG. 3 to FIG. 12, the following specifically describes upgrade methods based on an OTA technology provided in this application.

FIG. 3 is a schematic flowchart of an upgrade method based on an OTA technology according to this application. The method may include the following steps.

Step 301: The first device sends vehicle fleet information to the OTA cloud. Correspondingly, the OTA cloud receives the vehicle fleet information from the first device.

The first device is configured to manage a vehicle fleet, the vehicle fleet includes at least two vehicles, and the vehicle fleet information includes vehicle identifiers of vehicles belonging to a same vehicle fleet. For example, the vehicle identifier may include but is not limited to a vehicle identification number (vehicle identification number, VIN). With reference to FIG. 2, the vehicle fleet information may include a vehicle identifier of the vehicle 203a, a vehicle identifier of the vehicle 203b, and a vehicle identifier of the vehicle 203c. Further, in an optional implementation, the vehicle fleet information may further include a vehicle fleet identifier.

Table 1 shows possible vehicle fleet information provided in this application. In Table 1, vehicle identifiers corresponding to a vehicle fleet identifier 1 include VIN 1 to VIN 3, vehicle identifiers corresponding to a vehicle fleet identifier 2 include VIN 4 and VIN 5, and the like.

**Table 1: Vehicle fleet information**

| Vehicle fleet identifier | Vehicle identifier |
|---|---|
| 1 | VIN 1 |
| | VIN 2 |
| | VIN 3 |
| 2 | VIN 4 |
| | VIN 5 |
| ... | ... |

For example, vehicles belonging to a same owner may form a vehicle fleet, and it may be understood that the vehicles in the vehicle fleet belong to a same vehicle fleet. With reference to FIG. 2, the vehicle 203a, the vehicle 203b, and the vehicle 203c belong to a same vehicle fleet. The vehicle fleet may be managed by the first device. It may be understood that the first device may be configured to manage one or more vehicle fleets. For ease of description of the solutions in this application, an example in which the first device manages one vehicle fleet is used for description.

Step 302: The OTA cloud determines a first target vehicle based on the vehicle fleet information from the first device and a first vehicle identifier.

Step 302 is an optional step.

A first vehicle is a vehicle that needs upgrade and that is obtained by the OTA cloud. The first vehicle identifier is a vehicle identifier of the first vehicle. The first target vehicle is related to the vehicle fleet information and the first vehicle. Specifically, the first target vehicle may be a vehicle that needs upgrade in a vehicle fleet corresponding to the vehicle fleet information and that is determined by the OTA cloud based on the vehicle fleet information and the first vehicle.

In a possible implementation, the OTA cloud determines that N first vehicles need upgrade, and one first vehicle corresponds to one first vehicle identifier. It may also be understood that the OTA cloud determines that the N first vehicles corresponding to N first vehicle identifiers need upgrade, where N is a positive integer. For example, when software of the vehicle has a vulnerability (that is, the vulnerability needs to be remedied), a new function needs to be added, security protection needs to be upgraded, an architecture needs to be upgraded, or the like, the OTA cloud may determine that the vehicle needs upgrade, and then may generate a corresponding upgrade package.

Further, in an optional implementation, the OTA cloud may determine a vehicle fleet identifier to which the first vehicle identifier belongs, and determine whether the vehicle fleet identifier included in the vehicle fleet information is the same as the vehicle fleet identifier to which the first vehicle identifier belongs. If the vehicle fleet identifier included in the vehicle fleet information is the same as the vehicle fleet identifier to which the first vehicle identifier belongs, the OTA cloud may use the first vehicle identifier to match the vehicle identifiers in the vehicle fleet information one by one, to determine, as the first target vehicle, a vehicle corresponding to a vehicle identifier that is the same as the first vehicle identifier and that is in the vehicle identifiers in the vehicle fleet information. For example, the OTA cloud may determine M first target vehicles based on the vehicle fleet information and the N first vehicle identifiers, where M is a positive integer less than or equal to N.

For example, the OTA cloud may pre-store a correspondence between a vehicle fleet identifier and a vehicle identifier. Further, the OTA cloud may further create an account for each corresponding vehicle fleet, and store the account corresponding to the vehicle fleet, a vehicle fleet identifier, and a vehicle identifier (for example, the first vehicle identifier) of a vehicle (for example, the first vehicle) included in the vehicle fleet. It may be understood that the first device may obtain the vehicle fleet information of the managed vehicle fleet in advance. For example, the vehicle fleet information of the managed vehicle fleet may be input by a user.

Step 303: The OTA cloud sends first upgrade task information to a second target vehicle. Correspondingly, the second target vehicle receives the first upgrade task information from the OTA cloud.

The first upgrade task information includes an upgrade package. The second target vehicle is at least one vehicle determined by the first device from the first target vehicle. For a possible determining method, refer to descriptions of Method 1 and Method 2. Details are not described herein again.

Further, optionally, the first upgrade task information may further include an upgrade type. The upgrade type may include but is not limited to confirmed upgrade (that is, the first device has confirmed that upgrade may be directly performed), silent upgrade (direct upgrade is performed without notifying the user), conventional upgrade (upgrade is performed with consent of the user), forced upgrade (direct upgrade is performed without consent of the user after the user is notified), and the like. For example, the user may be a driver who uses the second target vehicle.

It can be learned from step 301 to step 303 that the first device sends the vehicle fleet information to the OTA cloud, so that the OTA cloud can obtain the vehicle identifiers of the vehicles that belong to the same vehicle fleet, to send the first upgrade task information to the second target vehicle that needs upgrade and that is determined by the first device.

Before step 301, a secure channel (or referred to as secure communication) may also be established between the OTA cloud and the first device in advance. For example, before sending the vehicle fleet information to the OTA cloud, the first device may perform some configurations, for example, configure a certificate or a private key. Based on configured information, the secure channel may be established between the OTA cloud and the first device. For example, the secure channel may include but is not limited to one or more of secure channels based on a hypertext transfer protocol over secure socket layer (hypertext transfer protocol over secure socket layer, HTTPS) or datagram transport layer security (datagram transport layer security, DTLS). A type of the secure channel is not limited in this application. The secure channel between the OTA cloud and the first device helps prevent information (for example, the vehicle fleet information) or data exchanged between the first device and the OTA cloud from being leaked, tampered with, damaged, or the like.

Before step 303, a secure channel may also be established between the OTA cloud and the vehicle (for example, the second target vehicle) in the vehicle fleet in advance. For details, refer to the secure channel established between the OTA cloud and the first device. The secure channel between the OTA cloud and the vehicle in the vehicle fleet helps prevent information (for example, the first upgrade task information) or data exchanged between the vehicle in the vehicle fleet and the OTA cloud from being leaked, tampered with, damaged, or the like.

Based on the content described in FIG. 3, the following shows examples of three possible methods for determining the second target vehicle.

### Method 1

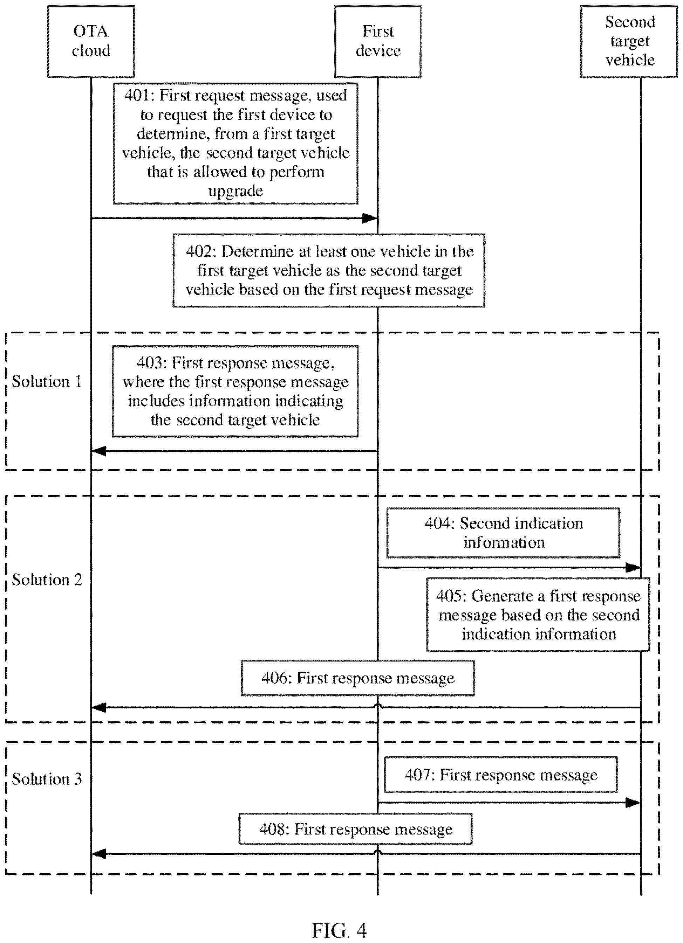

FIG. 4 is a schematic flowchart of a method for determining the second target vehicle by the first device according to this application. The method includes the following steps.

Step 401: The OTA cloud sends a first request message to the first device. Correspondingly, the first device receives the first request message from the OTA cloud.

The first request message is used to request the first device to determine, from the first target vehicle, the second target vehicle that is allowed to perform upgrade. For example, the first request message includes a vehicle identifier of the first target vehicle.

Further, in an optional implementation, the first request message may further include association information of an upgrade task, and the association information of the upgrade task includes at least one of duration required for upgrade, an upgrade purpose, or a change brought by upgrade.

Further, in an optional implementation, the associated information of the upgrade task may further include an upgrade condition, an upgrade sequence, a user notification policy, an upgrade package size, and the like. The upgrade condition may ensure that the vehicle successfully downloads the upgrade package. For example, the upgrade condition may include: The vehicle is not in one or more of the following states: an emergency handling state, a state in which an engine is in an operating state, a state in which storage space is insufficient, a state in which remaining traffic is lower than a preset traffic threshold, and the like. The upgrade sequence may indicate a time sequence in which different components are upgraded. The upgrade package size generally ranges from several megabytes (M) to 10-odd M.

It should be noted that the foregoing upgrade type may also belong to one item in the associated information of the upgrade task.

Step 402: The first device determines the at least one vehicle in the first target vehicle as the second target vehicle based on the first request message.

It may be understood that a quantity of first target vehicles is greater than or equal to a quantity of second target vehicles.

In a possible implementation, the first device may determine all the first target vehicles as second target vehicles that are allowed to perform upgrade.

In another possible implementation, the first device may determine some of the first target vehicles as second target vehicles that are allowed to perform upgrade.

In still another possible implementation, the first device may determine, from the first target vehicle based on at least one of the duration required for upgrade, the upgrade purpose, the change brought by upgrade, and the like, the second target vehicle that is allowed to perform upgrade.

It should be noted that the foregoing provided possible implementations in which the first device determines, from the first target vehicle, the second target vehicle that is allowed to perform upgrade are merely examples. This is not limited in this application.

After determining the second target vehicle, the first device may notify the OTA cloud in the following three possible solutions. In a solution 1, the following step 403 is performed. In a solution 2, the following step 404 to step 406 are performed. In a solution 3, the following step 407 and step 408 are performed.

Step 403: The first device sends a first response message to the OTA cloud. Correspondingly, the OTA cloud receives the first response message from the first device.

It may also be understood that the first device directly sends the first response message to the OTA cloud.

The first response message may include information about the second target vehicle. It may also be understood that the first response message may include related information of the second target vehicle that is allowed to perform upgrade and that is selected from the first target vehicle. For example, the first response message includes a second target vehicle identifier. It should be noted that the information about the second target vehicle may alternatively be other possible information, for example, may be information in any pre-agreed form. This is not limited in this application.

Step 404: The first device sends second indication information to the second target vehicle that is allowed to perform upgrade. Correspondingly, the second target vehicle receives the second indication information from the first device.

The second indication information may indicate whether upgrade is allowed for the second target vehicle or may indicate that upgrade is allowed for the second target vehicle. A specific form of the second indication information may be pre-agreed upon by the first device and the second target vehicle. For example, if the second indication information is " 1 ", it indicates that upgrade is allowed for the second target vehicle, or the second indication information is an identifier of the second target vehicle. It should be noted that specific content of the second indication information may also be notified by the first device to the second target vehicle. This is not limited in this application.

Herein, if the first device determines that there are a plurality of second target vehicles, the first device may send the second indication information to each of the plurality of second target vehicles.

Step 405: The second target vehicle generates a first response message based on the second indication information.

For descriptions of the first response message, refer to the descriptions of step 403. Details are not described herein again.

Step 406: The second target vehicle sends the first response message to the OTA cloud. Correspondingly, the OTA cloud receives the first response message from the second target vehicle.

Step 407: The first device sends a first response message to the second target vehicle. Correspondingly, the second target vehicle receives the first response message from the first device.

Herein, if the first device determines that there are a plurality of second target vehicles, the first device may send the first response message to each of the plurality of second target vehicles.

Step 408: The second target vehicle sends the first response message to the OTA cloud.

It may also be understood that, in step 407 and step 408, the second target vehicle is configured to transparently transmit the first response message of the first device.

According to step 401 to step 408, the first device can flexibly select, by using the association information of the upgrade task carried in the first request message and based on an actual situation, the first target vehicle that is allowed to perform upgrade. In addition, the first device can determine, in batches from the first target vehicles, the second target vehicles that are allowed to perform upgrade. This helps simplify management of the vehicle fleet by the first device.

### Method 2

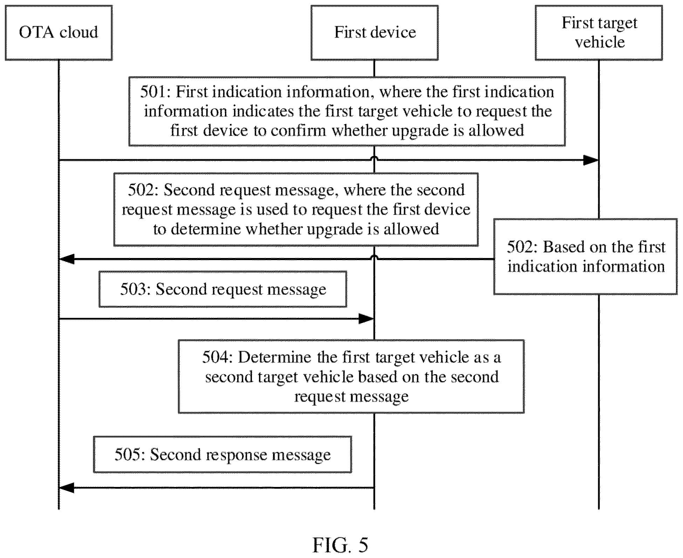

FIG. 5 is a schematic flowchart of another method for determining the second target vehicle by the first device according to this application. The method includes the following steps.

Step 501: The OTA cloud sends first indication information to the first target vehicle. Correspondingly, the first target vehicle receives the first indication information from the OTA cloud.

The first indication information indicates the first target vehicle to request the first device to confirm whether upgrade is allowed.

In a possible implementation, the first indication information includes an address of the first device. For example, the address may be a uniform resource locator (uniform resource locator, URL) link. The URL link may be linked to a web page or an application (application, APP) of the first device. In this way, the first target vehicle can accurately and quickly determine the first device.

Step 502: The first target vehicle sends a second request message to the OTA cloud based on the first indication information. Correspondingly, the OTA cloud receives the second request message from the first target vehicle.

The second request message is used to request the first device to determine whether the first target vehicle is allowed to perform upgrade. For example, the second request message includes a vehicle identifier of the first target vehicle.

Further, in an optional implementation, the first indication information further includes association information of an upgrade task, and the association information of the upgrade task may include but is not limited to at least one of duration required for upgrade, an upgrade purpose, or a change brought by upgrade. The association information of the upgrade task may be used by the first target vehicle to determine whether to send the second request message to the OTA cloud.

For example, after receiving the first indication information, the first target vehicle may determine, based on the association information of the upgrade task included in the first indication information, whether to send the second request message to the OTA cloud. For example, the first target vehicle determines whether a current status is one or more of the following states: an emergency handling state, a state in which an engine is in an operating state, a state in which storage space is insufficient, a state in which remaining traffic is lower than a preset traffic threshold, and the like. When determining that the current status is any one or more of the foregoing states, the first target vehicle may temporarily not send the second request message to the OTA cloud. For another example, when determining that the current status is not any one of the foregoing states, the first target vehicle sends the second request message to the OTA cloud.

In a possible implementation, the second request message may further carry the association information of the upgrade task. This helps the first device determines, based on the associated information of the upgrade task, whether the first target vehicle that sends the second request message is allowed to perform upgrade.

Step 503: The OTA cloud forwards the second request message to the first device. Correspondingly, the first device receives the second request message from the OTA cloud.

In a possible implementation, the OTA cloud transparently transmits the second request message to the first device. In another possible implementation, the OTA cloud may process the second request message and then forward a processed second request message to the first device, but a function or an indication meaning of the second request message remains unchanged. For example, if a communication protocol between the OTA cloud and the first target vehicle and a communication protocol between the OTA cloud and the first device are different, that the OTA cloud processes the second request message may be performing protocol conversion. A specific implementation in which the OTA cloud forwards the second request message is not limited in this application. Step 504: The first device determines the first target vehicle as the second target vehicle based on the second request message.

In a possible implementation, the first device directly determines that the first target vehicle that sends the second request message is allowed to perform upgrade. It may also be understood that the first device may directly determine, as the second target vehicle, the first target vehicle that sends the second request message.

In another possible implementation, the first device may determine, based on the association information of the upgrade task carried in the second request message, whether the first target vehicle that sends the second request message is allowed to perform upgrade.

For example, for the first device, one first target vehicle may send the second request message. If the first device determines that the first target vehicle that sends the second request message is allowed to perform upgrade, it is equivalent to determining, as the second target vehicle, that the first target vehicle that sends the second request message.

Step 505: The first device sends a second response message to the OTA cloud. Correspondingly, the OTA cloud receives the second response message from the first device.

The second response message includes information about the second target vehicle. In a possible implementation, the second response message may directly include the information about the second target vehicle. For example, the second response message includes a vehicle identifier of the second target vehicle. In another possible implementation, the second response message may include third indication information. The third indication information indicates information about the second target vehicle. It should be noted that the third indication information may be information in any pre-agreed form. This is not limited in this application.

### Method 3

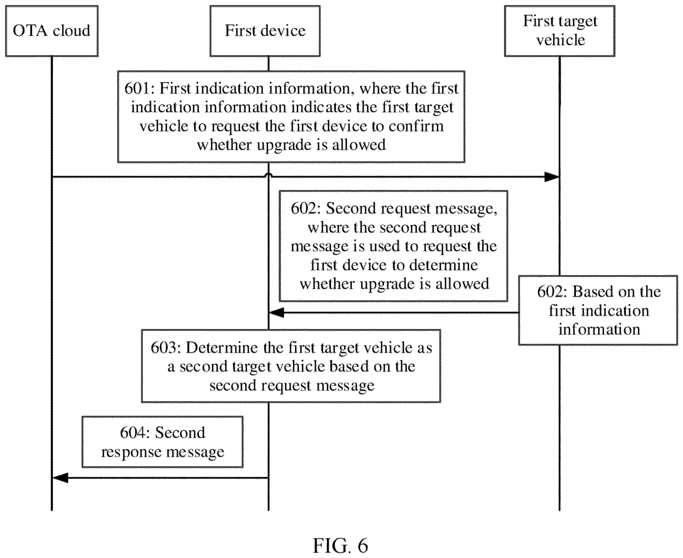

FIG. 6 is a schematic flowchart of still another method for determining the second target vehicle by the first device according to this application. The method includes the following steps.

Step 601: The OTA cloud sends first indication information to the first target vehicle. Correspondingly, the first target vehicle receives the first indication information from the OTA cloud.

For step 601, refer to the descriptions of step 501. Details are not described herein.

Step 602: The first target vehicle sends a second request message to the first device based on the first indication information. Correspondingly, the first device receives the second request message from the first target vehicle.

Step 603: The first device determines the first target vehicle as the second target vehicle based on the second request message.

For step 603, refer to the descriptions of step 504. Details are not described herein.

Step 604: The first device sends a second response message to the OTA cloud. Correspondingly, the OTA cloud receives the second response message from the first device.

For step 604, refer to the descriptions of step 505. Details are not described herein.

In a possible scenario, Method 2 is applicable to a scenario in which the vehicle in the vehicle fleet cannot directly communicate with the first device, and Method 3 is applicable to a scenario in which the vehicle in the vehicle fleet can directly communicate with the first device. Further, optionally, in the scenario in which the vehicle in the vehicle fleet directly communicates with the first device, in the vehicle fleet, a vehicle fleet agent is deployed on at least one vehicle, and an OTA agent is deployed on another vehicle. The vehicle on which the vehicle fleet agent is deployed may directly communicate with the first device. The vehicle on which the OTA agent is deployed may directly communicate with the vehicle on which the vehicle fleet agent is deployed. The vehicle fleet agent is software that may interact with the first device and/or the OTA cloud and that is deployed on a vehicle end. The OTA agent is software that is to be upgraded based on OTA.

According to Method 2 or Method 3, the first target vehicle can trigger, based on the first indication information, the first device to confirm whether the first target vehicle is allowed to perform upgrade, without prompting or asking a driver for confirmation through HMI. This helps reduce a burden of the driver. In addition, the first device determines which first target vehicles that are allowed to perform upgrade. This helps improve security of managing the vehicle in the vehicle fleet.

After receiving the first upgrade task, the second target vehicle can perform upgrade based on the first upgrade task information, and synchronize the upgrade result with the first device and the OTA.

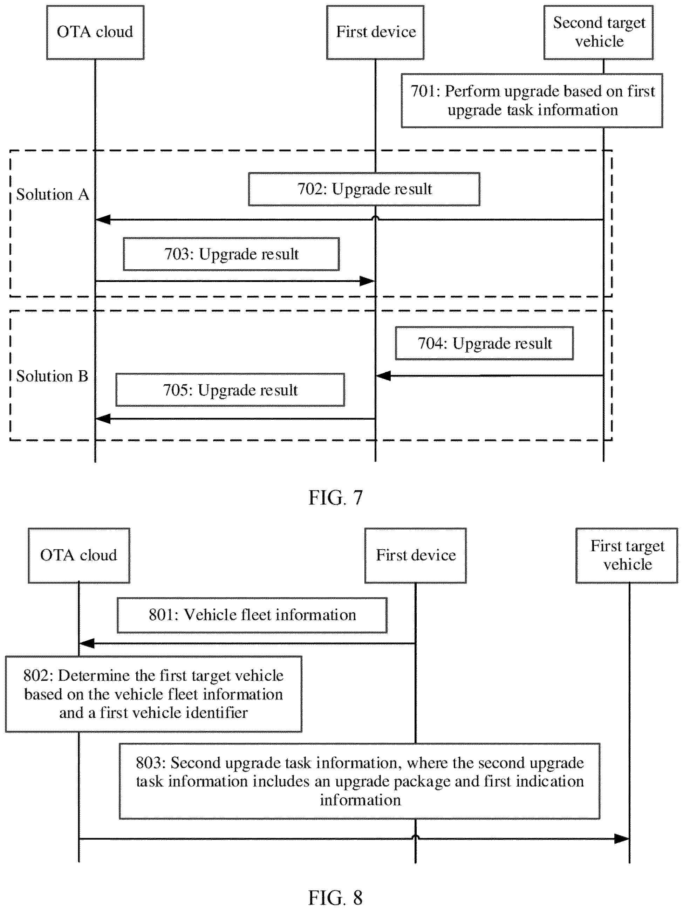

FIG. 7 is a schematic flowchart of an upgrade method for the second target vehicle according to this application. The method includes the following steps.

Step 701: The second target vehicle performs upgrade based on the first upgrade task information.

In a possible implementation, the first upgrade task information may further include the upgrade type. After determining that the upgrade type is confirmed upgrade, the second target vehicle may perform upgrade according to the OTA upgrade procedure based on the upgrade package included in the received first upgrade task information, without confirmation by the user (or referred to as the driver) of the second target vehicle. This can reduce the burden of the driver.

In another possible implementation, if the second target vehicle determines that the upgrade type is not confirmed upgrade, the second target vehicle may prompt, through the human-machine interaction HMI system, the user of the second target vehicle to confirm whether to perform upgrade. If it is detected that the user of the second target vehicle confirms to perform upgrade, the second target vehicle may perform upgrade based on the upgrade package included in the received first upgrade task information.

After the second target vehicle completes upgrade, the upgrade result may be synchronized to the first device and the OTA cloud by using the following two possible solutions. A solution A includes step 702 and step 703. A solution B includes step 704 and step 705.

Step 702: The second target vehicle sends the upgrade result to the OTA cloud. Correspondingly, the OTA cloud receives the upgrade result from the second target vehicle.

The upgrade result may include but is not limited to an upgrade success, an upgrade failure, a rollback success, or a rollback failure. Specifically, if the second target vehicle succeeds in performing upgrade, the second target vehicle sends an upgrade result of the upgrade success to the OTA cloud. If the second target vehicle fails to perform upgrade, the second target vehicle sends an upgrade result of the upgrade failure to the OTA cloud. Further, in an optional implementation, if the second target vehicle fails to perform upgrade, the second target vehicle may perform rollback, to minimize impact on normal use of the vehicle. Based on this, if rollback succeeds, the second target vehicle may send an upgrade result of the rollback success to the OTA cloud, or if rollback fails, the second target vehicle may send an upgrade result of the rollback failure to the OTA cloud.

For example, a specific form of the upgrade result may be pre-agreed upon by the second target vehicle and the OTA cloud. For example, 1 indicates the upgrade success, 0 indicates the upgrade failure, 10 indicates the rollback success, and 00 indicates the rollback failure. Alternatively, a specific form of the upgrade result may be indicated to the OTA cloud by the second target vehicle. The specific form of the upgrade result is not limited in this application.

Further, optionally, the upgrade result may further include the information about the second target vehicle. For example, the upgrade result may further include the vehicle identifier of the second target vehicle. For another example, the upgrade result may further include the third indication information. The third indication information indicates the information about the second target vehicle. In this way, the OTA cloud and the first device can quickly determine an upgrade result of a second target vehicle.

In an example, the second target vehicle may send the upgrade result to the OTA cloud that establishes a communication connection to a component like a T-Box.

Step 703: The OTA cloud sends the upgrade result to the first device. Correspondingly, the first device receives the upgrade result from the OTA cloud.

It may also be understood that, after receiving the upgrade result from the second target vehicle, the OTA cloud synchronizes the upgrade result to the first device in time.

Step 704: The second target vehicle sends the upgrade result to the first device. Correspondingly, the first device receives the upgrade result from the second target vehicle.

For step 704, refer to the descriptions of step 702. Specifically, the "OTA cloud" in step 702 may be replaced with the "first device". Details are not described herein again.

Step 705: The first device sends the upgrade result to the OTA cloud. Correspondingly, the OTA cloud receives the upgrade result from the first device.

In other words, after receiving the upgrade result from the second target vehicle, the first device synchronizes the upgrade result to the OTA cloud in time.

It can be learned from step 701 to step 705 that, after the second target vehicle performs upgrade based on the OTA, the OTA cloud or the first device can be notified of the upgrade result in time. Further, the OTA cloud can synchronize the upgrade result of the second target vehicle to the first device in time, or the first device can synchronize the upgrade result of the second target vehicle to the OTA cloud in time, so that upgrade information on the first device, the OTA cloud, and the second target vehicle can be synchronized. In this way, the first device can effectively and securely manage an upgrade status of each vehicle in the vehicle fleet.

FIG. 8 is a schematic flowchart of another upgrade method based on an OTA technology according to this application. The method may include the following steps.

Step 801: The first device sends vehicle fleet information to the OTA cloud. Correspondingly, the OTA cloud receives the vehicle fleet information from the first device.

For step 801, refer to step 301. Details are not described herein.

Step 802: The OTA cloud determines a first target vehicle based on the vehicle fleet information from the first device and a first vehicle identifier.

Step 802 is an optional step. For details, refer to step 302. Details are not described herein again.

Step 803: The OTA cloud sends second upgrade task information to the first target vehicle. Correspondingly, the first target vehicle receives the second upgrade task information from the OTA cloud.

The second upgrade task information includes an upgrade package and first indication information. The first indication information indicates the first target vehicle to request the first device to confirm whether the first target vehicle is allowed to perform upgrade. For descriptions of the first indication information, refer to the descriptions of step 501. Details are not described herein again. For example, after receiving the upgrade package in the second upgrade task information, the first target vehicle may first store the upgrade package.

In a possible implementation, the second upgrade task information may include a "notifier" attribute, and the first indication information may be set in a field of the "notifier" attribute.

For example, if there are M first target vehicles, the OTA cloud may send the second upgrade task information to each of the M first target vehicles, where M is a positive integer.

Further, in an optional implementation, the second upgrade task information further includes association information of an upgrade task. For the association information of the upgrade task, refer to the foregoing related descriptions. Details are not described herein again.

It can be learned from step 801 to step 803 that the first device sends the vehicle fleet information to the OTA cloud, so that the OTA cloud can obtain vehicle identifiers of vehicles belonging to a same vehicle fleet. Further, the OTA cloud sends the second upgrade task information that includes the first indication information to the first target vehicle, to indicate the first target vehicle to request the first device to confirm whether the first target vehicle is allowed to perform upgrade. In this way, the first device can determine whether the first target vehicle is allowed to perform upgrade.

For example, before step 801, a secure channel (or referred to as secure communication) may also be established between the OTA cloud and the first device in advance; and/or before step 803, a secure channel may also be established between the OTA cloud and the vehicle (for example, the first target vehicle) in the vehicle fleet in advance. For details, refer to the foregoing related descriptions. Details are not described herein again.

Based on FIG. 8, the following shows examples of schematic flowcharts of two methods for determining, by the first device, the first target vehicle that is allowed to perform upgrade.

### Method A

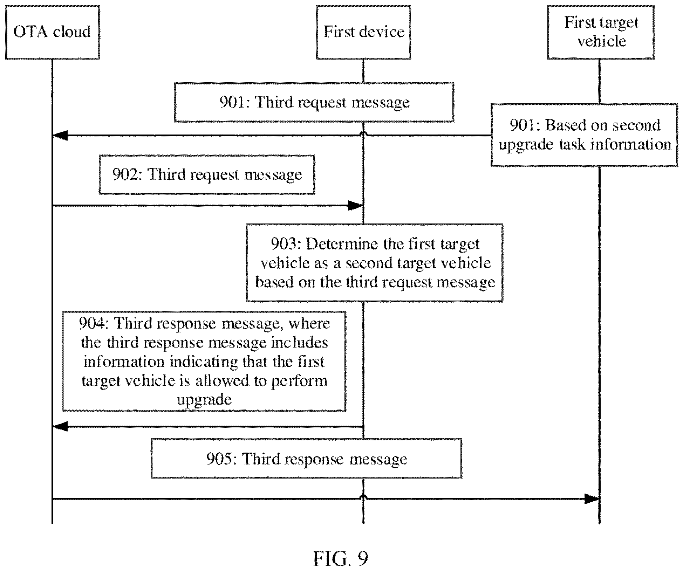

FIG. 9 is a schematic flowchart of a method for determining, by the first device, the first target vehicle that is allowed to perform upgrade according to this application. The method includes the following steps.

Step 901: The first target vehicle sends a third request message to the OTA cloud based on the second upgrade task information. Correspondingly, the OTA cloud receives the third request message from the first target vehicle.

The third request message is used to request the first device to confirm whether the first target vehicle is allowed to perform upgrade. For example, the third request message includes a vehicle identifier of the first target vehicle.

It should be noted that the third request message may be the same as or different from the second request message in step 603.

Further, in an optional implementation, the third request message may further include the association information of the upgrade task. For the association information of the upgrade task, refer to the related descriptions of step 401. Details are not described herein again. It may be understood that the association information of the upgrade task carried in the third request message may be carried when the OTA cloud sends the second upgrade task information to the first target vehicle in step 803, or may be sent by the OTA cloud to the first target vehicle before step 901.

Step 902: The OTA cloud forwards the third request message to the first device. Correspondingly, the first device receives the third request message from the OTA cloud.

In a possible implementation, the OTA cloud transparently transmits the third request message to the first device. In another possible implementation, the OTA cloud may process the third request message and then forward a processed third request message to the first device, but a function or an indication meaning of the second request message remains unchanged. For example, if a communication protocol between the OTA cloud and the first target vehicle and a communication protocol between the OTA cloud and the first device are different, that the OTA cloud processes the third request message may be performing protocol conversion. A specific implementation in which the OTA cloud forwards the third request message is not limited in this application.

Step 903: The first device determines the first target vehicle as a second target vehicle based on the third request message.

For step 903, refer to the descriptions of step 504. Details are not described herein.

In a possible implementation, the first device determines that the first target vehicle that sends the third request message is allowed to perform upgrade. It may also be understood that the first device may directly determine, as the second target vehicle, the first target vehicle that sends the third request message.

In another possible implementation, the first device may determine, based on the association information of the upgrade task carried in the third request message, whether the first target vehicle that sends the third request message is allowed to perform upgrade, and determine the first target vehicle as the second target vehicle if the first target vehicle that sends the third request message is allowed to perform upgrade.

Step 904: The first device sends a third response message to the OTA cloud. Correspondingly, the OTA cloud receives the third response message from the first device.

The third response message includes information indicating that the first target vehicle is allowed to perform upgrade. For example, the third response message includes a vehicle identifier of the second target vehicle. The second target vehicle is the first target vehicle that is allowed to perform upgrade and that is determined by the first device. It should be noted that the information indicating that the first target vehicle is allowed to perform upgrade may also be information in any pre-agreed form. This is not limited in this application.

Step 905: The OTA cloud forwards the third response message to the first target vehicle. Correspondingly, the first target vehicle receives the third response message from the OTA cloud.

In a possible implementation, the OTA cloud transparently transmits the third response message to the first device. In another possible implementation, the OTA cloud may process the third response message and then forward a processed third response message to the first target vehicle, but a function or an indication meaning of the third response message remains unchanged. For example, if a communication protocol between the OTA cloud and the first target vehicle and a communication protocol between the OTA cloud and the first device are different, that the OTA cloud processes the third response message may be performing protocol conversion. A specific implementation in which the OTA cloud forwards the third response message is not limited in this application.

It may be understood that the second upgrade task information sent by the OTA cloud to each first target vehicle in FIG. 8 already includes the upgrade package. Therefore, after receiving the third response message, the second target vehicle may directly perform upgrade based on the stored upgrade package in the second upgrade task information.

In step 901 to step 905, the first target vehicle can trigger, based on the first indication information included in the second upgrade task information, the first device to confirm which first target vehicles are to be upgraded, without prompting or asking a driver for confirmation through HMI. This helps reduce a burden of the driver. In addition, the first device determines which first target vehicles are to be upgraded. This helps improve security of managing the vehicle in the vehicle fleet.

### Method B

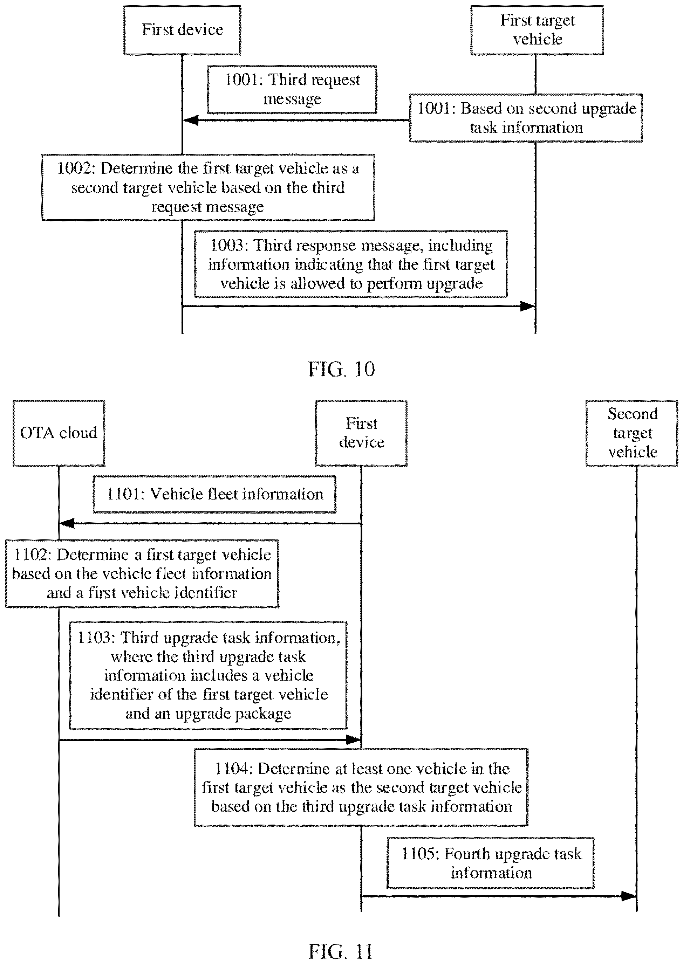

FIG. 10 is a schematic flowchart of another method for determining, by the first device, the first target vehicle that is allowed to perform upgrade according to this application. The method includes the following steps.

Step 1001: The first target vehicle sends a third request message to the first device based on the second upgrade task information. Correspondingly, the first device receives the third request message from the first target vehicle.

For step 1001, refer to the descriptions of step 901. Specifically, the "OTA cloud" in step 901 may be replaced with the "first device". Other content is not described herein again.

Step 1002: The first device determines the first target vehicle as a second target vehicle based on the third request message.

For step 1002, refer to the descriptions of step 903. Details are not described herein.

Step 1003: The first device sends a third response message to the first target vehicle. Correspondingly, the first target vehicle receives the third response message from the first device.

For step 1003, refer to the descriptions of step 904. Specifically, the "OTA cloud" in step 904 may be replaced with the "first target vehicle". Other content is not described herein again.

In a possible scenario, Method A is applicable to a scenario in which the vehicle in the vehicle fleet cannot directly communicate with the first device, and Method B is applicable to a scenario in which the vehicle in the vehicle fleet can directly communicate with the first device.

For example, after completing upgrade based on the upgrade package in the second upgrade task information, the first target vehicle may synchronize an upgrade result with the OTA cloud and the first device. For details, refer to the descriptions in FIG. 7. Specifically, the "second target vehicle" in FIG. 7 may be replaced with the "first target vehicle". Details are not described herein again.

FIG. 11 is a schematic flowchart of another upgrade method based on an OTA technology according to this application. The method may include the following steps.

Step 1101: The first device sends vehicle fleet information to the OTA cloud. Correspondingly, the OTA cloud receives the vehicle fleet information from the first device.

For step 1101, refer to step 301. Details are not described herein.

Step 1102: The OTA cloud determines a first target vehicle based on the vehicle fleet information and a first vehicle identifier.

Step 1102 is an optional step. For details, refer to step 302. Details are not described herein again.

Step 1103: The OTA cloud sends third upgrade task information to the first device. Correspondingly, the first device receives the third upgrade task information from the OTA cloud.

The third upgrade task information includes a vehicle identifier of the first target vehicle and an upgrade package.

To prevent the upgrade package from tampering or damage, after generating the upgrade package, the OTA cloud may first encrypt the upgrade package. It may also be understood that the upgrade package included in the third upgrade task information may be an encrypted upgrade package.

The following shows examples of two encryption manners in which the OTA cloud encrypts the upgrade package.

### Manner 1: symmetric-key encryption.

In a possible implementation, the OTA cloud encrypts the upgrade package in a manner of symmetric key encryption, to obtain the encrypted upgrade package. For example, the OTA cloud may encrypt the upgrade package by using an advanced encryption standard (advanced encryption standard, AES) algorithm.

Further, in an optional implementation, the OTA cloud may maintain a symmetric key encryption algorithm, and notify the first device of the symmetric key encryption algorithm. Alternatively, the OTA cloud and the first device may agree upon a symmetric key encryption algorithm in advance. This is not limited in this application.

### Manner 2: asymmetric key encryption

In a possible implementation, the OTA cloud encrypts the upgrade package in a manner of asymmetric key encryption, to obtain the encrypted upgrade package. The OTA cloud may maintain a key pair (for example, a public key and a private key). The OTA cloud encrypts the upgrade package by using the private key, and notifies the first device of the public key. The public key is used by the first device to decrypt the encrypted upgrade package.

It should be noted that the foregoing provided two encryption manners are merely examples, and another possible encryption manner may alternatively be used. This is not limited in this application.

In a possible implementation, the third upgrade task information may further include association information of an upgrade task. For the association information of the upgrade task, refer to the foregoing related descriptions. Details are not described herein again.

Step 1104: The first device determines at least one vehicle in the first target vehicles as a second target vehicle based on the third upgrade task information.

The third upgrade task information includes a first target vehicle identifier and the upgrade package.

In a possible implementation, the first device determines, as second target vehicles that are allowed to perform upgrade, all first target vehicles corresponding to the first target vehicle identifier included in the third upgrade task information.

In another possible implementation, the first device determines, as second target vehicles that are allowed to perform upgrade, some of first target vehicles corresponding to the first target vehicle identifier included in the third upgrade task information.

In still another possible implementation, if the third upgrade task information further includes the association information of the upgrade task, the first device may determine, based on the association information of the upgrade task from a first target vehicle corresponding to the first target vehicle identifier included in the third upgrade task information, the second target vehicle that is allowed to perform upgrade.

It should be noted that the foregoing provided possible implementations in which the first device determines, from the first target vehicle, the second target vehicle that is allowed to perform upgrade are merely examples. This is not limited in this application.

Step 1105: The first device sends fourth upgrade task information to the second target vehicle. Correspondingly, the second target vehicle receives the fourth upgrade task information from the first device.

The fourth upgrade task information is related to the third upgrade task information. In an example, the fourth upgrade task information is the same as the third upgrade task information. In another example, the fourth upgrade task information is obtained based on the third upgrade task information. For example, the fourth upgrade task information includes information obtained after the first device performs digital signature on the received upgrade package. Digital signature is performed on the upgrade package included in the third upgrade task information, to further improve security of communication between the first device and the second target vehicle.

In a possible implementation, the fourth upgrade task information may further include an upgrade type, and the upgrade type is confirmed upgrade.

For example, after completing upgrade based on the fourth upgrade task information, the second target vehicle may synchronize an upgrade result with the first device and the OTA cloud. For details, refer to the descriptions in FIG. 7. Details are not described herein again.

It can be learned from step 1101 to step 1105 that the first device sends the vehicle fleet information to the OTA cloud, so that the OTA cloud can obtain vehicle identifiers of vehicles belonging to a same vehicle fleet, and further sends the third upgrade task information including the vehicle identifier of the first target vehicle to the first device. In this way, the first device can determine which first target vehicles that are allowed to perform upgrade, to help improve security of managing the vehicle in the vehicle fleet.

The foregoing embodiment is applicable to a scenario in which the first device can directly communicate with a vehicle in a vehicle fleet managed by the first device. Further, optionally, to implement direct communication between the vehicle in the vehicle fleet and the first device, in the vehicle fleet, a vehicle fleet agent is deployed on at least one vehicle, and an OTA agent is deployed on another vehicle. The vehicle on which the vehicle fleet agent is deployed may directly communicate with the first device. The vehicle on which the OTA agent is deployed may directly communicate with the vehicle on which the vehicle fleet agent is deployed. It may be understood that the second target vehicle on which the OTA agent is deployed may be understood as an OTA client, and the OTA cloud may be understood as an OTA service end. The vehicle fleet agent may include software that may interact with the first device and/or the OTA cloud and that is deployed on a vehicle end. The OTA agent may include software that is to be upgraded based on OTA, for example, software that supports OTA upgrade, or software that implements OTA upgrade.

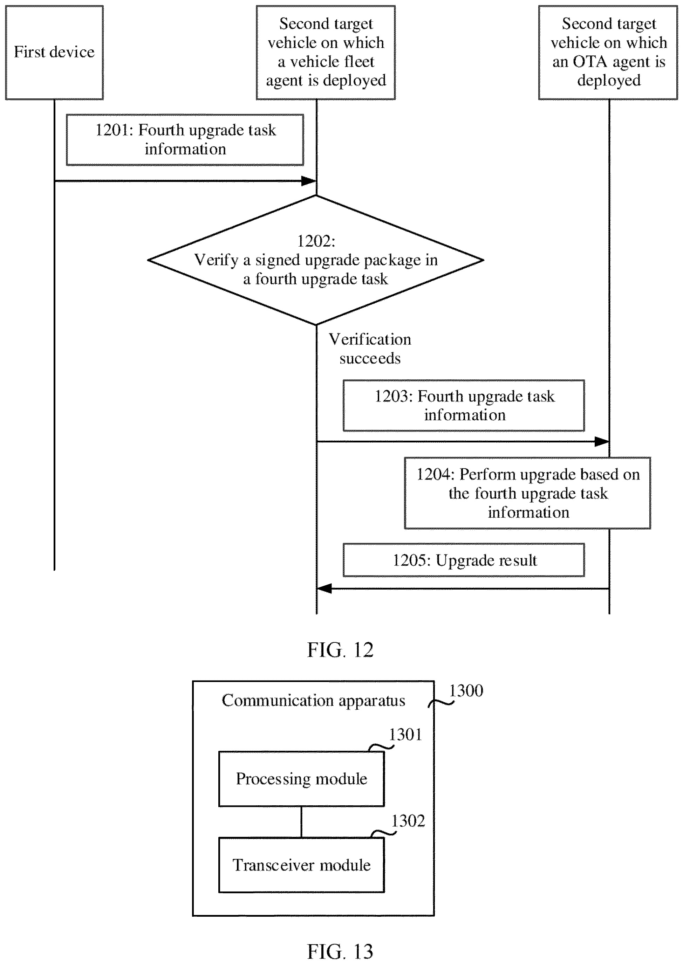

FIG. 12 is a schematic flowchart of a method for sending, by the first device, the fourth upgrade task information to the second target vehicle according to this application. The method includes the following steps.

Step 1201: The first device sends the fourth upgrade task information to the second target vehicle on which the vehicle fleet agent is deployed. Correspondingly, the second target vehicle on which the vehicle fleet agent is deployed receives the fourth upgrade task information from the first device.

Step 1202: The second target vehicle on which the vehicle fleet agent is deployed verifies a signed upgrade package in a fourth upgrade task, and performs step 1203 if verification succeeds, or end the upgrade task if verification fails.

Step 1202 is an optional step.

For example, before sending the upgrade package to the second target vehicle on which the vehicle fleet agent is deployed, the first device may first perform digital signature on the upgrade package. After receiving the digitally signed upgrade package, the second target vehicle on which the vehicle fleet agent is deployed first verifies a digital signature of the upgrade package, and then performs subsequent processing after the digital signature is successfully verified. This helps improve security of the upgrade package and reduce a possibility of an upgrade error.

Step 1203: The second target vehicle on which the vehicle fleet agent is deployed sends the fourth upgrade task information to the second target vehicle on which the OTA agent is deployed.

Step 1204: The second target vehicle on which the OTA agent is deployed performs upgrade based on the fourth upgrade task information.

The fourth upgrade task information further includes the upgrade type of confirmed upgrade.

In a possible implementation, after determining that the upgrade type is confirmed upgrade, the second target vehicle on which the OTA agent is deployed may directly perform upgrade according to an OTA upgrade procedure without confirmation by a driver.

Step 1205: The second target vehicle on which the OTA agent is deployed sends the upgrade result to the second target vehicle on which the vehicle fleet agent is deployed. Correspondingly, the second target vehicle on which the vehicle fleet agent is deployed receives the upgrade result from the second target vehicle on which the OTA agent is deployed.

For the upgrade result in step 1205, refer to the foregoing related descriptions. Details are not described herein again.

Further, for a process of synchronizing the upgrade result among the second target vehicle on which the vehicle fleet agent is deployed, the first device, and the OTA cloud, refer to the foregoing descriptions in FIG. 7. Details are not described herein again.

For example, that the first device establishes a secure channel with the vehicle in the vehicle fleet may be that the first device establishes a secure channel with the second target vehicle on which the vehicle fleet agent is deployed. It may be understood that, to implement the functions in the foregoing embodiments, the communication apparatus includes a corresponding hardware structure and/or a software module for performing each function. A person skilled in the art should be easily aware that, in combination with modules and method steps in the examples described in embodiments disclosed in this application, this application can be implemented by hardware or a combination of hardware and computer software. Whether a function is performed by hardware or computer software depends on particular application scenarios and design constraints of the technical solutions.

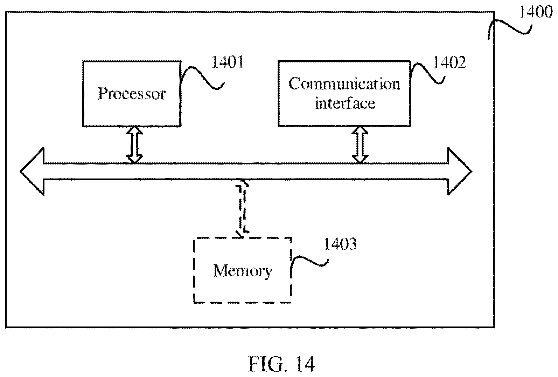

Based on the foregoing content and a same concept, FIG. 13 and FIG. 14 are diagrams of possible structures of communication apparatuses according to this application. These communication apparatuses may be configured to implement the functions of the first device, the OTA cloud or the vehicle in the foregoing method embodiments, and therefore can also achieve the beneficial effects of the foregoing method embodiments. In this application, the communication apparatus may be the server 101, the first device 102, the second device 103a, the second device 103b, or the second device 103c shown in FIG. 1, may be the OTA cloud 201, the first device 202, the vehicle 203a, the vehicle 203b, or the vehicle 203c shown in FIG. 2, or may be a module (for example, a chip) applied to a vehicle, a first device, or an OTA cloud.

As shown in FIG. 13, the communication apparatus 1300 includes a processing module 1301 and a transceiver module 1302. The communication apparatus 1300 is configured to implement the method embodiment shown in FIG. 3, FIG. 4, FIG. 5, FIG. 7, FIG. 8, FIG. 9, FIG. 10, FIG. 11, or FIG. 12.

When the communication apparatus 1300 is configured to implement the functions of the OTA cloud in the method embodiment shown in FIG. 3, under control of the processing module 1301, the transceiver module 1302 is configured to: receive vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and send first upgrade task information to a second target vehicle, where the first upgrade task information includes an upgrade package, the second target vehicle is at least one vehicle determined by the first device from a first target vehicle, the first target vehicle is related to the vehicle fleet information and a first vehicle, and the first vehicle is a vehicle that needs upgrade and that is obtained by the OTA cloud.

In a possible implementation, the transceiver module 1302 is further configured to: send a first request message to the first device, where the first request message includes a vehicle identifier of the first target vehicle; and receive a first response message from the first device or the second target vehicle, where the first response message includes information about the second target vehicle. In a possible implementation, the first response message may directly include the information about the second target vehicle. For example, the first response message includes a vehicle identifier of the second target vehicle. In another possible implementation, the first response message may include third indication information. The third indication information indicates information about the second target vehicle. The third indication information may be information in any pre-agreed form. This is not limited in this application.

In a possible implementation, the first request message further includes association information of an upgrade task, and the association information of the upgrade task includes at least one of duration required for upgrade, an upgrade purpose, or a change brought by upgrade.

In a possible implementation, the first upgrade task information further includes an upgrade type, and the upgrade type is confirmed upgrade.

In a possible implementation, the transceiver module 1302 is further configured to: send first indication information to the first target vehicle, where the first indication information indicates the first target vehicle to request the first device to confirm whether upgrade is allowed; and receive a second response message from the first device or the second target vehicle, where the second response message includes information about the second target vehicle.

In a possible implementation, the first indication information includes an address of the first device.

In a possible implementation, the first indication information further includes association information of an upgrade task, and the association information of the upgrade task includes at least one of duration required for upgrade, an upgrade purpose, or a change brought by upgrade.

In a possible implementation, the transceiver module 1302 is further configured to receive an upgrade result from the second target vehicle. The upgrade result includes an upgrade success, an upgrade failure, a rollback success, or a rollback failure.

In a possible implementation, the transceiver module 1302 is further configured to send the upgrade result to the first device.

When the communication apparatus 1300 is configured to implement the functions of the first device in the method embodiment shown in FIG. 3, the transceiver module 1302 is configured to send vehicle fleet information to an OTA cloud, where the first device is configured to manage a vehicle fleet, the vehicle fleet includes at least two vehicles, and the vehicle fleet information includes vehicle identifiers of vehicles belonging to a same vehicle fleet; and receive a first request message from the OTA cloud, where the first request message includes a vehicle identifier of a first target vehicle, and the first target vehicle is a vehicle that needs upgrade in the vehicle fleet and that is determined by the OTA cloud. The processing module 1301 is configured to determine at least one vehicle in the first target vehicle as a second target vehicle based on the first request message. The transceiver module 1302 is further configured to send a first response message to the OTA cloud, where the first response message includes information about the second target vehicle.

In a possible implementation, the first request message further includes association information of an upgrade task, and the association information of the upgrade task includes at least one of duration required for upgrade, an upgrade purpose, or a change brought by upgrade.

In a possible implementation, the transceiver module 1302 is further configured to receive an upgrade result from the second target vehicle. The upgrade result includes an upgrade success, an upgrade failure, a rollback success, or a rollback failure.

In a possible implementation, the transceiver module 1302 is further used by the first device to send the upgrade result to the OTA cloud.

For more detailed descriptions of the processing module 1301 and the transceiver module 1302, refer to the related descriptions in the method embodiment shown in FIG. 3. Details are not described herein again.

It should be understood that, in embodiments of this application, the processing module 1301 may be implemented by a processor or a processor-related circuit component, and the transceiver module 1302 may be implemented by a transceiver or a transceiver-related circuit component.

When the communication apparatus 1300 is configured to implement the functions of the OTA cloud in the method embodiment shown in FIG. 8, under control of the processing module 1301, the transceiver module 1302 is configured to: receive vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and send second upgrade task information to a first target vehicle, where the second upgrade task information includes an upgrade package and first indication information, the first target vehicle is related to the vehicle fleet information and a first vehicle, the first vehicle is a vehicle that needs upgrade and that is obtained by the OTA cloud, and the first indication information indicates the first target vehicle to request the first device to confirm whether the first target vehicle is allowed to perform upgrade.

In a possible implementation, the first indication information includes an address of the first device.

In a possible implementation, the second upgrade task information further includes association information of an upgrade task, and the association information of the upgrade task includes at least one of duration required for upgrade, an upgrade purpose, or a change brought by upgrade.

In a possible implementation, the transceiver module 1302 is further configured to receive an upgrade result from a second target vehicle. The upgrade result includes an upgrade success, an upgrade failure, a rollback success, or a rollback failure.

In a possible implementation, the transceiver module 1302 is further configured to send the upgrade result to the first device.

When the communication apparatus 1300 is configured to implement the functions of the first device in the method embodiment shown in FIG. 8, the transceiver module 1302 is configured to send vehicle fleet information to an OTA cloud, where the first device is configured to manage a vehicle fleet, the vehicle fleet includes at least two vehicles, and the vehicle fleet information includes vehicle identifiers of vehicles belonging to a same vehicle fleet; receive a third request message from a first target vehicle, where the third request message is used to request the first device to confirm whether the first target vehicle is allowed to perform upgrade, the first target vehicle is related to the vehicle fleet information and a first vehicle, and the first vehicle is a vehicle that needs upgrade and that is obtained by the OTA cloud; and send a third response message to the first target vehicle, where the third response message includes information indicating that the first target vehicle is allowed to perform upgrade.

In a possible implementation, the third request message further includes association information of an upgrade task, and the association information of the upgrade task includes at least one of duration required for upgrade, an upgrade purpose, or a change brought by upgrade.

In a possible implementation, the transceiver module 1302 is further configured to receive an upgrade result from the first target vehicle. The upgrade result includes an upgrade success, an upgrade failure, a rollback success, or a rollback failure.

In a possible implementation, the transceiver module 1302 is further configured to send the upgrade result to the OTA cloud.

For more detailed descriptions of the processing module 1301 and the transceiver module 1302, refer to the related descriptions in the method embodiment shown in FIG. 8. Details are not described herein again.

It should be understood that, in embodiments of this application, the processing module 1301 may be implemented by a processor or a processor-related circuit component, and the transceiver module 1302 may be implemented by a transceiver or a transceiver-related circuit component.

When the communication apparatus 1300 is configured to implement the functions of the OTA cloud in the method embodiment shown in FIG. 11, under control of the processing module 1301, the transceiver module 1302 is configured to: receive vehicle fleet information from a first device, where the first device is configured to manage a vehicle fleet, the vehicle fleet includes at least two vehicles, and the vehicle fleet information includes vehicle identifiers of vehicles belonging to a same vehicle fleet; and send third upgrade task information to the first device, where the third upgrade task information includes a vehicle identifier of a first target vehicle and an upgrade package, the first target vehicle is related to the vehicle fleet information and a first vehicle, the first vehicle is a vehicle that needs upgrade and that is obtained by the OTA cloud, the upgrade package corresponds to a second target vehicle, and the second target vehicle is at least one vehicle determined by the first device from the first target vehicle.

In a possible implementation, the third upgrade task information further includes association information of an upgrade task, and the association information of the upgrade task includes at least one of duration required for upgrade, an upgrade purpose, or a change brought by upgrade.

In a possible implementation, the transceiver module 1302 is further configured to receive an upgrade result from the second target vehicle. The upgrade result includes an upgrade success, an upgrade failure, a rollback success, or a rollback failure.

In a possible implementation, the transceiver module 1302 is further configured to send the upgrade result to the first device.

When the communication apparatus 1300 is configured to implement the functions of the first device in the method embodiment shown in FIG. 11, the transceiver module 1302 is configured to send vehicle fleet information to an OTA cloud, where the first device is configured to manage a vehicle fleet, the vehicle fleet includes at least two vehicles, and the vehicle fleet information includes vehicle identifiers of vehicles belonging to a same vehicle fleet; and receive third upgrade task information from the OTA cloud, where the third upgrade task information includes a first target vehicle identifier and an upgrade package. The processing module 1301 is configured to determine at least one vehicle in a first target vehicle as a second target vehicle based on the third upgrade task information. The transceiver module 1302 is further configured to send fourth upgrade task information to the second target vehicle, where the fourth upgrade task information is related to the third upgrade task information.

In a possible implementation, the fourth upgrade task information includes information obtained after the first device performs digital signature on the upgrade package.

In a possible implementation, the fourth upgrade task information further includes an upgrade type, and the upgrade type is confirmed upgrade.

In a possible implementation, the transceiver module 1302 is further configured to receive an upgrade result from the second target vehicle. The upgrade result includes an upgrade success, an upgrade failure, a rollback success, or a rollback failure.

In a possible implementation, the transceiver module 1302 is further configured to send the upgrade result to the OTA cloud.

For more detailed descriptions of the processing module 1301 and the transceiver module 1302, refer to the related descriptions in the method embodiment shown in FIG. 11. Details are not described herein again.

It should be understood that, in embodiments of this application, the processing module 1301 may be implemented by a processor or a processor-related circuit component, and the transceiver module 1302 may be implemented by a transceiver or a transceiver-related circuit component.

It should be understood that division into the units of the communication apparatus is merely logical function division. During actual implementation, all or some of the units may be integrated into a physical entity, or may be physically separated. In addition, the unit in the communication apparatus may be implemented in a form of invoking software by the processor. For example, the communication apparatus includes the processor. The processor is connected to a memory. The memory stores instructions. The processor invokes the instructions stored in the memory, to implement any one of the foregoing methods or implement the functions of each unit of the communication apparatus. For example, the processor is a general-purpose processor, for example, a central processing unit (Central Processing Unit, CPU) or a microprocessor, and the memory is a memory in the communication apparatus or a memory outside the communication apparatus. The memory may include but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information to the storage medium. Certainly, the storage medium may be a component of the processor. The processor and the storage medium may be disposed in an ASIC. In addition, the ASIC may be located in a first device, an OTA cloud, or a vehicle. Certainly, the processor and the storage medium may alternatively exist in a first device, an OTA cloud, or a vehicle as discrete components.

Alternatively, the units in the communication apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by a programmable logic device (programmable logic device, PLD). A field programmable gate array (Field Programmable Gate Array, FPGA) is used as an example. The field programmable gate array may include a large quantity of logic gate circuits. A configuration file is used to configure a connection relationship between the logic gate circuits, to implement the functions of some or all of the units. All the units of the communication apparatus may be implemented in the form of invoking the software by the processor, or may be implemented in the form of the hardware circuit, or some of the units may be implemented in the form of invoking the software by the processor, and a remaining unit may be implemented in the form of the hardware circuit.

In embodiments of this application, the processor is a circuit that has a signal processing capability. In an implementation, the processor may be a circuit that has an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a function by using a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement the functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU).

It can be learned that each unit in the communication apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units in the communication apparatus may be integrated, or may be independently implemented. In an implementation, these units are integrated and implemented in a form of a system-on-a-chip (system-on-a-chip, SOC). The SOC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

Based on the foregoing content and a same concept, as shown in FIG. 14, this application further provides a communication apparatus 1400. The communication apparatus 1400 may include a processor 1401 and a communication interface 1402. The processor 1401 and the communication interface 1402 are coupled to each other. It may be understood that the communication interface 1402 may be an interface circuit or an input/output interface. Optionally, the communication apparatus 1400 may further include a memory 1403, configured to store instructions to be executed by the processor 1401, store input data required by the processor 1401 to run instructions, or store data generated after the processor 1401 runs instructions.

When the communication apparatus 1400 is configured to implement the method shown in FIG. 3, FIG. 8, or FIG. 11, the processor 1401 is configured to: perform the functions of the processing module 1301, and perform the function of the transceiver module 1302 through the communication interface 1402.

Based on the foregoing content and a same concept, this application provides a chip. The chip may include a processor and an interface circuit. Further, in an optional implementation, the chip may further include a memory. The processor is configured to execute a computer program or instructions stored in the memory, to enable the chip to perform the method in any possible implementation in the method embodiment shown in FIG. 3, FIG. 4, FIG. 5, FIG. 7, FIG. 8, FIG. 9, FIG. 10, FIG. 11, or FIG. 12.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instruction is loaded and executed on a computer, all or some of the procedures or functions in embodiments of this application are performed. The computer may be a general-purpose computer, a dedicated computer, a computer network, a network device, user equipment, or another programmable apparatus. The computer program or the instruction may be stored in a computer-readable storage medium, or may be transmitted from a computer-readable storage medium to another computer-readable storage medium. For example, the computer program or the instruction may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

In embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural. In text descriptions of this application, the character "/" generally indicates an "or" relationship between associated objects. In a formula of this application, the character "/" indicates a "division" relationship between associated objects. In addition, in embodiments of this application, the term "for example" is used to represent giving an example, an illustration, or a description. Any embodiment or design scheme described as an "example" in this application should not be explained as being more preferred or having more advantages than another embodiment or design scheme. Alternatively, it may be understood as that use of the word "example" is intended to present a concept in a specific manner, and constitutes no limitation on this application.

It may be understood that various numbers in this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and the like are used to distinguish between similar objects but do not necessarily indicate a specific order or sequence. In addition, the terms "include" and "have" and any variant thereof are intended to cover a non-exclusive inclusion, for example, include a series of steps or units. Methods, systems, products, or devices are not necessarily limited to those steps or units that are expressly listed, but may include other steps or units that are not expressly listed or that are inherent to such processes, methods, products, or devices.

Although this application is described with reference to specific features and embodiments thereof, it is clear that various modifications and combinations may be made to them without departing from the spirit and scope of this application. Correspondingly, this specification and the accompanying drawings are merely example descriptions of the solution defined by the appended claims, and are considered as any or all of modifications, variations, combinations, or equivalents that cover the scope of this application.

It is clear that a person skilled in the art can make various modifications and variations to this application without departing from the spirit and the scope of the present invention. In this case, this application is intended to cover these modifications and variations of embodiments of this application provided that they fall within the scope of the claims of this application and equivalent technologies thereof.

## Claims

1. An upgrade method based on an over-the-air OTA technology, comprising:
receiving vehicle fleet information from a first device, wherein the first device is configured to manage a vehicle fleet, the vehicle fleet comprises at least two vehicles, and the vehicle fleet information comprises vehicle identifiers of vehicles belonging to a same vehicle fleet; and
sending first upgrade task information to a second target vehicle, wherein the first upgrade task information comprises an upgrade package, the second target vehicle is at least one vehicle determined by the first device from a first target vehicle, the first target vehicle is related to the vehicle fleet information and a first vehicle, and the first vehicle is a vehicle that needs upgrade and that is obtained by an OTA cloud.

2. The method according to claim 1, wherein the method further comprises:
sending a first request message to the first device, wherein the first request message comprises a vehicle identifier of the first target vehicle; and
receiving a first response message from the first device or the second target vehicle, wherein the first response message comprises information about the second target vehicle.

3. The method according to claim 2, wherein the first request message further comprises association information of an upgrade task, and the association information of the upgrade task comprises at least one of duration required for upgrade, an upgrade purpose, or a change brought by upgrade.

4. The method according to any one of claims 1 to 3, wherein the first upgrade task information further comprises an upgrade type, and the upgrade type is confirmed upgrade.

5. The method according to claim 1, wherein the method further comprises:
sending first indication information to the first target vehicle, wherein the first indication information indicates the first target vehicle to request the first device to confirm whether upgrade is allowed; and
receiving a second response message from the first device or the second target vehicle, wherein the second response message comprises information about the second target vehicle.

6. The method according to claim 5, wherein the first indication information comprises an address of the first device.

7. The method according to claim 5 or 6, wherein the first indication information further comprises association information of an upgrade task, and the association information of the upgrade task comprises at least one of duration required for upgrade, an upgrade purpose, or a change brought by upgrade.

8. The method according to any one of claims 1 to 7, wherein the method further comprises:
receiving an upgrade result from the second target vehicle, wherein the upgrade result comprises an upgrade success, an upgrade failure, a rollback success, or a rollback failure.

9. The method according to claim 8, wherein the method comprises:
sending the upgrade result to the first device.

10. An upgrade method based on an over-the-air OTA technology, comprising:
sending, by a first device, vehicle fleet information to an OTA cloud, wherein the first device is configured to manage a vehicle fleet, the vehicle fleet comprises at least two vehicles, and the vehicle fleet information comprises vehicle identifiers of vehicles belonging to a same vehicle fleet;
receiving, by the first device, a first request message from the OTA cloud, wherein the first request message comprises a vehicle identifier of a first target vehicle, and the first target vehicle is a vehicle that needs upgrade in the vehicle fleet and that is determined by the OTA cloud;
determining, by the first device, at least one vehicle in the first target vehicle as a second target vehicle based on the first request message; and
sending, by the first device, a first response message to the OTA cloud, wherein the first response message comprises information about the second target vehicle.

11. The method according to claim 10, wherein the first request message further comprises association information of an upgrade task, and the association information of the upgrade task comprises at least one of duration required for upgrade, an upgrade purpose, or a change brought by upgrade.

12. The method according to claim 10 or 11, wherein the method further comprises:
receiving, by the first device, an upgrade result from the second target vehicle, wherein the upgrade result comprises an upgrade success, an upgrade failure, a rollback success, or a rollback failure.

13. The method according to claim 12, wherein the method further comprises:
sending, by the first device, the upgrade result to the OTA cloud.

14. An upgrade method based on an over-the-air OTA technology, comprising:
receiving vehicle fleet information from a first device, wherein the first device is configured to manage a vehicle fleet, the vehicle fleet comprises at least two vehicles, and the vehicle fleet information comprises vehicle identifiers of vehicles belonging to a same vehicle fleet; and
sending second upgrade task information to a first target vehicle, wherein the second upgrade task information comprises an upgrade package and first indication information, the first target vehicle is related to the vehicle fleet information and a first vehicle, the first vehicle is a vehicle that needs upgrade and that is obtained by an OTA cloud, and the first indication information indicates the first target vehicle to request the first device to confirm whether the first target vehicle is allowed to perform upgrade.

15. The method according to claim 14, wherein the first indication information comprises an address of the first device.

16. The method according to claim 14 or 15, wherein the second update task information further comprises association information of an upgrade task, and the association information of the upgrade task comprises at least one of duration required for upgrade, an upgrade purpose, or a change brought by upgrade.

17. An upgrade method based on an over-the-air OTA technology, comprising:
sending, by a first device, vehicle fleet information to an OTA cloud, wherein the first device is configured to manage a vehicle fleet, the vehicle fleet comprises at least two vehicles, and the vehicle fleet information comprises vehicle identifiers of vehicles belonging to a same vehicle fleet;
receiving, by the first device, a third request message from a first target vehicle, wherein the third request message is used to request the first device to confirm whether the first target vehicle is allowed to perform upgrade, the first target vehicle is related to the vehicle fleet information and a first vehicle, and the first vehicle is a vehicle that needs upgrade and that is obtained by the OTA cloud; and
sending, by the first device, a third response message to the first target vehicle, wherein the third response message comprises information indicating that the first target vehicle is allowed to perform upgrade.

18. The method according to claim 17, wherein the third request message further comprises association information of an upgrade task, and the association information of the upgrade task comprises at least one of duration required for upgrade, an upgrade purpose, or a change brought by upgrade.

19. An upgrade method based on an over-the-air OTA technology, comprising:
receiving second upgrade task information from an OTA cloud, wherein the second upgrade task information comprises an upgrade package and first indication information, the first indication information indicates a first target vehicle to request a first device to confirm whether the first target vehicle is allowed to perform upgrade, the first device is configured to manage a vehicle fleet, the vehicle fleet comprises at least two vehicles, vehicle fleet information comprises vehicle identifiers of vehicles belonging to a same vehicle fleet, the first target vehicle is related to the vehicle fleet information and a first vehicle, and the first vehicle is a vehicle that needs upgrade and that is obtained by the OTA cloud;
sending a third request message to the first device or the OTA cloud based on the second upgrade task information, wherein the third request message is used to request the first device to confirm whether the first target vehicle is allowed to perform upgrade; and
receiving a third response message from the first device, wherein the third response message comprises information indicating that the first target vehicle is allowed to perform upgrade.

20. The method according to claim 19, wherein the third request message further comprises association information of an upgrade task, and the association information of the upgrade task comprises at least one of duration required for upgrade, an upgrade purpose, or a change brought by upgrade.

21. An upgrade method based on an over-the-air OTA technology, comprising:
receiving vehicle fleet information from a first device, wherein the first device is configured to manage a vehicle fleet, the vehicle fleet comprises at least two vehicles, and the vehicle fleet information comprises vehicle identifiers of vehicles belonging to a same vehicle fleet; and
sending third upgrade task information to the first device, wherein the third upgrade task information comprises a vehicle identifier of a first target vehicle and an upgrade package, the first target vehicle is related to the vehicle fleet information and a first vehicle, the first vehicle is a vehicle that needs upgrade and that is obtained by an OTA cloud, the upgrade package corresponds to a second target vehicle, and the second target vehicle is at least one vehicle determined by the first device from the first target vehicle.

22. The method according to claim 21, wherein the third update task information further comprises association information of an upgrade task, and the association information of the upgrade task comprises at least one of duration required for upgrade, an upgrade purpose, or a change brought by upgrade.

23. An upgrade method based on an over-the-air OTA technology, comprising:
sending, by a first device, vehicle fleet information to an OTA cloud, wherein the first device is configured to manage a vehicle fleet, the vehicle fleet comprises at least two vehicles, and the vehicle fleet information comprises vehicle identifiers of vehicles belonging to a same vehicle fleet;
receiving, by the first device, third upgrade task information from the OTA cloud, wherein the third upgrade task information comprises a first target vehicle identifier and an upgrade package;
determining, by the first device, at least one vehicle in a first target vehicle as a second target vehicle based on the third upgrade task information; and
sending, by the first device, fourth upgrade task information to the second target vehicle, wherein the fourth upgrade task information is related to the third upgrade task information.

24. The method according to claim 23, wherein the fourth upgrade task information comprises information obtained after the first device performs digital signature on the upgrade package.

25. The method according to claim 23 or 24, wherein the fourth upgrade task information further comprises an upgrade type, and the upgrade type is confirmed upgrade.

26. A communication apparatus, comprising a module configured to perform the method according to any one of claims 1 to 25.

27. A communication apparatus, comprising a processor, wherein the processor is connected to a memory, the memory is configured to store a computer program, and the processor is configured to execute the computer program stored in the memory, to enable the communication apparatus to perform the method according to any one of claims 1 to 25.

28. A communication system, comprising a communication apparatus configured to perform the method according to any one of claims 1 to 9, and a first device configured to perform the method according to any one of claims 10 to 13; or
comprising a communication apparatus configured to perform the method according to any one of claims 14 to 16, a first device configured to perform the method according to claim 17 or 18, and a communication apparatus configured to perform the method according to claim 19 or 20; or
comprising a communication apparatus configured to perform the method according to claim 21 or 22, and a first device configured to perform the method according to any one of claims 23 to 25.

29. A computer-readable storage medium, wherein the computer-readable storage medium stores a computer program or instructions, and when the computer program or the instructions are executed by a communication apparatus, the communication apparatus is enabled to perform the method according to any one of claims 1 to 25.

30. A computer program product, wherein the computer program product comprises a computer program or instructions, and when the computer program or the instructions are executed by a communication apparatus, the communication apparatus is enabled to perform the method according to any one of claims 1 to 25.
